# EUROPEAN PATENT SPECIFICATION

(11) **EP 4 468 735 B1**
(45) Date of publication and mention of the grant of the patent: **18.03.2026**
(21) Application number: 23838517.3
(22) Date of filing: 04.05.2023
(51) Int. Cl.: H04R 1/02, H04R 9/02, H04R 1/28

(54) **LOUDSPEAKER MODULE AND ELECTRONIC DEVICE**
LAUTSPRECHERMODUL UND ELEKTRONISCHE VORRICHTUNG
MODULE DE HAUT-PARLEUR ET DISPOSITIF ÉLECTRONIQUE

(30) Priority: 15.07.2022 CN 202210830426
(43) Date of publication of application: 27.11.2024
(73) Proprietor: Honor Device Co., Ltd., Shenzhen, Guangdong 518040 (CN)
(72) Inventor: LIU, Jinhua, Shenzhen, Guangdong 518040 (CN)
(74) Representative: MERH-IP Matias Erny Reichl Hoffmann Patentanwälte PartG mbB
(86) International application number: PCT/CN2023/092102
(87) International publication number: WO 2024/012019

(56) References cited:
- WO-A1-2021/138954
- WO-A1-2021/253539
- WO-A1-2022/007023
- CN-A- 112 866 880
- CN-A- 113 473 276
- CN-A- 113 709 637
- CN-U- 210 609 586
- CN-U- 214 756 896
- US-A1- 2017 265 007

## Description

This application claims priority to Chinese Patent Application No. 202210830426.4, filed on July 15, 2022 and entitled "SPEAKER MODULE AND ELECTRONIC DEVICE".

### TECHNICAL FIELD

This application relates to the field of audio technologies, and in particular, to a speaker module and an electronic device.

### BACKGROUND

A speaker module is a commonly used audio assembly in a current electronic device. With a development trend of a light and thin electronic device, a mounting space left for the speaker module is getting increasingly smaller, and therefore, the speaker module also develops toward lighting and thinning. However, a volume of a rear sound cavity of the light and thin speaker module is small, which reduces sound quality of the speaker module. As a result, a sound quality experience of the electronic device is poor.
Document WO 2021/138954 A1 relates to a loudspeaker enclosure that comprises an upper cover, a lower cover, a sound production unit, a ventilation isolation assembly and a conductive terminal. The upper cover extends to form a supporting wall, the sound production unit comprises a basket fixed on the supporting wall and a magnet yoke fixed on the basket, the conductive terminal is electrically connected to the sound production unit, a receding opening is provided in the position of the magnet yoke opposite the conductive terminal, the ventilation isolation assembly is respectively fixed to the supporting wall and the magnet yoke, a containing space is divided into a front cavity and a rear cavity by means of the ventilation isolation assembly and the sound production unit, the ventilation isolation assembly surrounds the sound production unit, the lower cover is provided with an opening, the ventilation isolation assembly and the sound production unit are exposed from the containing space by means of the opening, the ventilation isolation assembly is recessed to form a receding step, the lower cover covers the receding step, the rear cavity is filled with sound-absorbing particles, and the sound-absorbing particles are packaged in the rear cavity by means of the ventilation isolation assembly.
Document WO 2022/007023 A1 relates to a loudspeaker box that comprises a housing having an accommodation space, a sound production unit accommodated in the accommodation space of the housing, and a ventilation isolation member which is accommodated in the accommodation space and covers the sound production unit. The housing comprises an upper cover and a lower cover, the sound production unit comprises a magnetic circuit system having a magnetic yoke, the lower cover comprises a bottom wall, a mounting hole formed in the bottom wall, and a hole wall forming the mounting hole in an enclosing mode, the magnetic yoke comprises a magnetic yoke body and a first clamping portion provided at the edge of the magnetic yoke body, the magnetic yoke body is mounted in the mounting hole and exposed in the accommodation space, the ventilation isolation member comprises a cover body and a second clamping portion extending out from one end of the cover body, the cover body is sleeved and tightly attached to the magnetic yoke body, and the second clamping portion and the first clamping portion are connected in a clamped mode so that the magnetic yoke body is exposed from the mounting hole.
Document CN 112866880 A relates to an electroacoustic transducer that comprises a center magnet, two first edge magnets, two second edge magnets, a voice coil, a voice diaphragm and two flexible circuit boards; the two first edge magnets are symmetrically arranged on the two sides of the center magnet, a first gap is formed between the first edge magnets and the center magnet, the two second edge magnets are symmetrically arranged on the two sides of the center magnet, and the second edge magnets are located on the sides, away from the center magnet, of the first edge magnets. One end of the voice coil is located in the first gap, and the voice diaphragm is fixedly connected with the other end of the voice coil. The two flexible circuit boards are symmetrically arranged on the two sides of the center magnet, the flexible circuit boards are located on the side, away from the center magnet, of the first edge magnet and located between the second edge magnet and the voice diaphragm, and the tail ends of the two branches of the flexible circuit boards are fixedly connected with the two corners of the voice coil respectively.

### SUMMARY

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

This application provides a speaker module and an electronic device, to improve sound quality of the speaker module, and improve a sound quality experience of the electronic device.

According to a first aspect, this application provides a speaker module, including a first housing, a second housing, an electroacoustic transducer, sound-absorbing particles, and an isolation assembly. The second housing is mounted in the first housing, and is enclosed with the first housing to form a sound cavity. An avoidance hole is provided on the second housing, and the avoidance hole is in communication with the sound cavity and an outer side of the second housing. The electroacoustic transducer is mounted in the sound cavity. The electroacoustic transducer includes a lower pole piece and a sound membrane. The lower pole piece runs through the avoidance hole, and is spaced apart from a hole wall of the avoidance hole. The sound membrane is spaced apart from the lower pole piece, and divides the sound cavity into a front sound cavity and a rear sound cavity. The sound-absorbing particles are filled in the rear sound cavity. The isolation assembly includes a fixing ring and a breathable isolating member. The fixing ring is mounted between the second housing and the lower pole piece, and is arranged surrounding an edge of the lower pole piece. The breathable isolating member is fixedly connected to an upper surface of the fixing ring, and is located between the hole wall of the avoidance hole and the lower pole piece. The breathable isolating member is arranged surrounding the electroacoustic transducer, and is configured to isolate the sound-absorbing particles and the electroacoustic transducer. The electroacoustic transducer further includes a basin frame, the basin frame includes a basket, the basket is located between the lower pole piece and the sound membrane, and the breathable isolating member is located on a lower side of the basket, and is spaced apart from the basket. A size of a gap between the breathable isolating member and the basket is less than a particle size of each of the sound-absorbing particles. This may prevent the sound-absorbing particles from entering the inside of the electroacoustic transducer from the gap between the breathable isolating member and the basket, and ensure sound quality of the speaker module.

In the speaker module shown in this application, the sound-absorbing particles are filled in the rear sound cavity, implementing acoustic expansion of the rear sound cavity, which is equivalent to expanding a volume of the rear sound cavity. This helps implement better low-frequency speaker performance of the speaker module, and improves a sound effect experience of the speaker module. The breathable isolating member may isolate the sound-absorbing particles and the electroacoustic transducer, which may prevent the sound-absorbing particles from entering the electroacoustic transducer and affecting a sound quality effect of the electroacoustic transducer.

In addition, the breathable isolating member and the fixing ring are predetermined to be fixed, and the breathable isolating member is not directly assembled to the electroacoustic transducer, which not only does not affect a size of the electroacoustic transducer, but also helps implement a light and thin design of the speaker module. This may further avoid an impact of the breathable isolating member on a size of a magnetic circuit and performance of a magnetic circuit, and helps improve a sound quality experience of the speaker module.

In an implementation, a sound outlet hole is provided on the first housing, and the sound outlet hole is in communication with the front sound cavity and an outer side of the first housing. Sounds that are emitted when the speaker module operates are transmitted from the sound outlet hole to the outside of the speaker module, to implement sound emission of the speaker module.

In an implementation, the sound outlet hole has a first opening and a second opening that are provided opposite to each other. The first opening is located on an inner surface of the first housing, and the second opening is located on an outer surface of the second housing. A pore size of the sound outlet hole gradually increases in a direction from the first opening to the second opening, which helps improve loudness of sound emission of the speaker module.

In an implementation, a first mounting groove is provided on the second housing, an opening of the first mounting groove is located on a lower surface of the second housing, and the first mounting groove is provided surrounding the avoidance hole, and runs through the hole wall of the avoidance hole. A second mounting groove is provided on the lower pole piece, an opening of the second mounting groove is located on a lower surface of the lower pole piece, and the second mounting groove is provided surrounding the edge of the lower pole piece, and runs through a peripheral side surface of the lower pole piece.

The fixing ring is mounted between the first mounting groove and the second mounting groove. At least a part of the fixing ring may also reuse a space of the second housing and the lower pole piece in a thickness direction of the speaker module, to reduce a space occupied by the fixing ring in the thickness direction of the speaker module. This helps implement a light and thin design of the speaker module.

In an implementation, a lower surface of the fixing ring is flush with the lower surface of the second housing, or a lower surface of the fixing ring is located on an upper side of the lower surface of the second housing. The fixing ring may completely reuse a space of the second housing in a thickness direction of the speaker module, to reduce a space occupied by the fixing ring in the thickness direction of the speaker module. This helps implement a light and thin design of the speaker module.

In an implementation, the lower surface of the fixing ring is flush with the lower surface of the lower pole piece, or the lower surface of the fixing ring is located on an upper side of the lower surface of the lower pole piece. The fixing ring may completely reuse a space of the lower pole piece in a thickness direction of the speaker module, to reduce a space occupied by the fixing ring in the thickness direction of the speaker module. This helps implement a light and thin design of the speaker module.

In an implementation, both a groove bottom wall surface of the first mounting groove and a groove bottom wall surface of the second mounting groove are flat surfaces, the speaker module further includes an adhesive layer, a part of the adhesive layer is adhesively connected between the upper surface of the fixing ring and the groove bottom wall surface of the first mounting groove, and a part of the adhesive layer is adhesively connected between the upper surface of the fixing ring and the groove bottom wall surface of the second mounting groove.

Because both the groove bottom wall surface of the first mounting groove and the groove bottom wall surface of the second mounting groove are flat surfaces, when the fixing ring is mounted by using the adhesive layer, glue is easy to apply and flatten. In this way, high-quality adhesive connection between the fixing ring and the second housing and the lower pole piece may be implemented, and a problem of glue overflow in an adhesive connection process may be further avoided. This is beneficial to implementing an ultra-thin design of the speaker module.

In an implementation, the second housing includes a housing body and a reinforcing member, a mounting through hole is provided on the housing body, the mounting through hole runs through the housing body in a thickness direction of the housing body, the reinforcing member is fixedly connected to an upper surface of the housing body, and is arranged surrounding the mounting through hole, and a part of the reinforcing member protrudes relative to a hole wall of the mounting through hole, and is enclosed with the hole wall of the mounting through hole to form the first mounting groove.

The avoidance hole is formed in a middle portion of the mounting through hole, the first mounting groove is formed at an edge of the mounting through hole, and the groove bottom wall surface of the first mounting groove is formed on a lower surface of the reinforcing member.

In an implementation, the housing body is made of plastic, the reinforcing member is made of metal, and the housing body and the reinforcing member are integrally formed. Because the reinforcing member is a steel sheet made of steel, and the lower surface of the reinforcing member forms the groove bottom wall surface of the first mounting groove, structural stability of the first mounting groove may be ensured, and an overall strength of the second housing may be enhanced.

In an implementation, the fixing ring and the second housing are integrally formed, to simplify a manufacturing process of the speaker module, and reduce a production cost of the speaker module.

In an implementation, a plurality of first positioning posts are arranged on the second housing, the plurality of first positioning posts are arranged on an upper surface of the second housing, and are spaced apart surrounding the avoidance hole, and the plurality of first positioning posts are located on an outer side of the breathable isolating member, and are spaced apart from the breathable isolating member, to prevent the breathable isolating member from being deformed in a direction facing away from the electroacoustic transducer, and ensure use reliability of the breathable isolating member.

In an implementation, a plurality of second positioning posts are arranged on the electroacoustic transducer, and the plurality of second positioning posts are located at an edge of the electroacoustic transducer, and are spaced apart from each other. The plurality of second positioning posts are located on an inner side of the breathable isolating member, and are spaced apart from the breathable isolating member, to prevent the breathable isolating member from being deformed toward a direction of the electroacoustic transducer. This may not only ensure use reliability of the breathable isolating member, but also prevent a deformed breathable isolating member from entering the inside of the electroacoustic transducer, causing noise or abnormal vibration.

In addition, positioning of the breathable isolating member is implemented through the first positioning posts and the second positioning posts that are located on two sides. An end of the breathable isolating member away from the fixing ring does not need to be fixed with glue. This avoids a problem of blocking the breathable holes by the glue and affecting vent efficiency, and improves breathability of the breathable isolating member.

In an implementation, a size of a gap between each of the second positioning posts and each of the first positioning posts is less than the particle size of each of the sound-absorbing particles, to ensure that after the breathable isolating member is deformed, the sound-absorbing particles cannot enter the electroacoustic transducer through the gap between each of the second positioning posts and each of the first positioning posts. This ensures a sound quality experience of the speaker module.

In an implementation, the basin frame includes a plurality of second positioning posts. The plurality of second positioning posts are fixedly connected to a lower surface of the basket, and are spaced apart from legs.

In an implementation, a plurality of engagement notches are provided on the lower pole piece, the plurality of engagement notches run through the lower pole piece in a thickness direction of the lower pole piece, and run through the peripheral side surface of the lower pole piece, and the plurality of engagement notches are spaced apart from each other.

The basin frame further includes a plurality of legs, the plurality of legs are fixedly connected to the lower surface of the basket, and are spaced apart from each other, and the plurality of legs are engaged with the plurality of engagement notches one by one, to implement assembly between the basin frame and the lower pole piece.

The fixing ring is further mounted on the plurality of legs.

In an implementation, a mounting notch is further provided on each of the legs, and an opening of the mounting notch is located on a lower surface of each of the legs. The mounting notch further runs through an outer surface, a left side surface, and a right side surface of each of the legs, and is in communication with the second mounting groove. The fixing ring is further mounted on the mounting notch.

In an implementation, a groove bottom wall surface of the mounting notch is a flat surface. A part of the adhesive layer is adhesively connected between the upper surface of the fixing ring and the groove bottom wall surface of the mounting notch.

In an implementation, the electroacoustic transducer further includes two first side magnets, and both the two first side magnets are mounted on an upper surface of the lower pole piece, are spaced apart, and are arranged opposite to each other.

Two avoidance notches are provided on the breathable isolating member, both the two avoidance notches run through the breathable isolating member in a thickness direction of the breathable isolating member, and run through an upper surface of the breathable isolating member, and the two avoidance notches are spaced apart and are provided opposite to each other, and are separately configured to avoid the two first side magnets. The two avoidance notches may further avoid the legs of the basin frame, to reduce a space occupied by the breathable isolating member in the electroacoustic transducer. This helps implement a light and thin design of the speaker module.

In an implementation, the fixing ring is made of metal. For example, the fixing ring is a steel ring made of steel. The fixing ring has a high strength and therefore can be processed very thin, and a height of the breathable isolating member can be increased, thereby increasing a vent volume of the breathable isolating member.

In an implementation, a plurality of breathable holes are provided on the breathable isolating member, and each of the breathable holes runs through the breathable isolating member in the thickness direction of the breathable isolating member. A pore size of each of the breathable holes is less than the particle size of each of the sound-absorbing particles, to prevent the sound-absorbing particles from passing through the breathable isolating member through the breathable holes and entering the electroacoustic transducer, and affecting sound quality of the electroacoustic transducer.

In an implementation, the breathable isolating member is a metal mesh, and the breathable holes are mesh holes of the breathable isolating member. Alternatively, the breathable isolating member is made of metal. For example, the breathable isolating member is a steel plate, and the breathable holes are formed by drilling holes.

According to a second aspect, this application provides an electronic device, including a housing and any of the foregoing speaker module, where the speaker module is mounted on an inner side of the housing.

In the speaker module of the electronic device shown in this application, the sound-absorbing particles are filled in the rear sound cavity, implementing acoustic expansion of the rear sound cavity, which is equivalent to expanding a volume of the rear sound cavity. This helps implement better low-frequency speaker performance of the speaker module, and improves a sound effect experience of the speaker module. The breathable isolating member may isolate the sound-absorbing particles and the electroacoustic transducer, which may prevent the sound-absorbing particles from entering the electroacoustic transducer and affecting a sound quality effect of the electroacoustic transducer.

In addition, the breathable isolating member and the fixing ring are predetermined to be fixed, and the breathable isolating member is not directly assembled to the electroacoustic transducer, which not only does not affect a size of the electroacoustic transducer, but also helps implement a light and thin design of the speaker module. This may further avoid an impact of the breathable isolating member on a size of a magnetic circuit and performance of a magnetic circuit, and helps improve a sound quality experience of the speaker module.

### BRIEF DESCRIPTION OF DRAWINGS

To describe the technical solutions in embodiments of this application more clearly, the following describes the accompanying drawings required for describing embodiments of this application.
FIG. 1 is a schematic diagram of a structure of an electronic device according to an embodiment of this application;
FIG. 2A is a schematic diagram of a structure of a speaker module in the electronic device shown in FIG. 1;
FIG. 2B is a schematic diagram of a structure of the speaker module shown in FIG. 2A from another perspective;
FIG. 3 is an exploded structural diagram of the speaker module shown in FIG. 2B;
FIG. 4 is a schematic diagram of a structure of a first housing in the speaker module shown in FIG. 3;
FIG. 5A is a schematic diagram of a structure of a second housing in the speaker module shown in FIG. 3;
FIG. 5B is a schematic diagram of a structure of the second housing shown in FIG. 5A from another perspective;
FIG. 6 is a schematic diagram of a structure of the speaker module shown in FIG. 2B cut along I-I;
FIG. 7 is a schematic diagram of a structure of the speaker module shown in FIG. 2B cut along II-II;
FIG. 8 is a schematic diagram of a structure of an electroacoustic transducer in the speaker module shown in FIG. 3;
FIG. 9 is a schematic diagram of an exploded structure of the electroacoustic transducer shown in FIG. 8;
FIG. 10A is a schematic diagram of a structure of a magnetic circuit assembly in the electroacoustic transducer shown in FIG. 9;
FIG. 10B is a schematic diagram of a structure of the magnetic circuit assembly shown in FIG. 10A from another perspective.
FIG. 11 is a schematic diagram of an exploded structure of the magnetic circuit assembly shown in FIG. 10B;
FIG. 12 is a schematic diagram of a structure of a vibration assembly in the electroacoustic transducer shown in FIG. 9 from another perspective.
FIG. 13 is a schematic diagram of an exploded structure of the vibration assembly shown in FIG. 12;
FIG. 14 is a schematic diagram of a cross-sectional structure of the electroacoustic transducer shown in FIG. 8 cut along III-III;
FIG. 15 is a schematic diagram of a cross-sectional structure of the electroacoustic transducer shown in FIG. 8 cut along IV-IV;
FIG. 16A is a schematic diagram of a structure of an isolation assembly in the speaker module shown in FIG. 3 in an implementation;
FIG. 16B is a schematic diagram of a structure of the isolation assembly shown in FIG. 16A from another perspective;
FIG. 17 is a schematic diagram of a structure of an isolation assembly in the speaker module shown in FIG. 3 in another implementation;
FIG. 18 is a schematic diagram of a cross-sectional structure of the isolation assembly shown in FIG. 17 cut along V-V;
FIG. 19A is a schematic diagram of a structure of an isolation assembly of a speaker module in a second electronic device according to an embodiment of this application;
FIG. 19B is a schematic diagram of a structure of the isolation assembly shown in FIG. 19A from another perspective; and
FIG. 20 is a schematic diagram of a structure of a speaker module cut along I-I in a second electronic device according to an embodiment of this application.

### DESCRIPTION OF EMBODIMENTS

The following clearly and completely describes technical solutions in embodiments of this application with reference to the accompanying drawings in embodiments of this application.

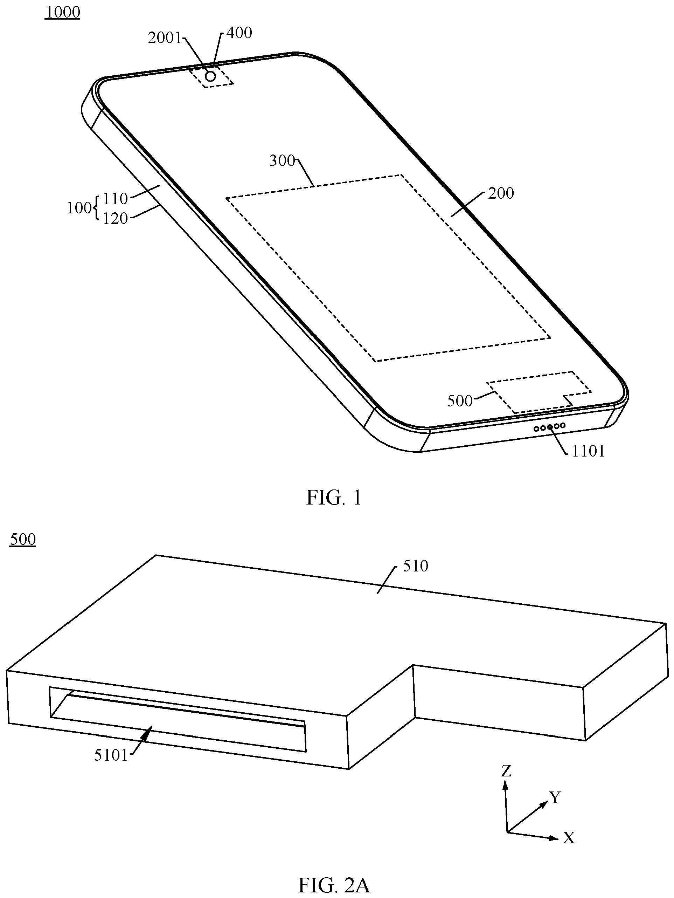

FIG. 1 is a schematic diagram of a structure of an electronic device 1000 according to an embodiment of this application.

The electronic device 1000 may be an electronic product capable of emitting sounds through audio such as a personal computer (PC, personal computer), a notebook computer, a tablet computer, a television, a multimedia player, an e-book reader, a vehicle-mounted device, a mobile phone, a wearable device, or a Walkman. A description is provided in embodiments of this application by using an example in which the electronic device 1000 is the mobile phone.

The electronic device 1000 includes a housing 100, a display module 200, a circuit board 300, a camera module 400, and a speaker module 500. The display module 200 is mounted in the housing 100, and the circuit board 300, the camera module 400, and the speaker module 500 are all mounted on an inner side of the housing 100. The display module 200, the camera module 400, and the camera module are all electrically connected to the circuit board 300. The circuit board 300 may be a mainboard (mainboard) of the electronic device 1000. Functional components such as a processor or a memory may be mounted on the circuit board 300. The processor is electrically connected to the display module 200, the camera module 400, and the speaker module 500 through the circuit board 300, and may send electrical signals to the display module 200, the camera module 400, and the speaker module 500 through the circuit board 300.

The housing 100 includes a frame 110 and a rear cover 120. The rear cover 120 is fixedly connected to a side of the frame 110. A speaker hole 1101 is provided on the frame 110, and the speaker hole 1101 runs through an inner side and an outer side of the frame 110. The speaker hole 1101 is located at a bottom portion of the frame 110. For example, there are five speaker holes 1101, and the five speaker holes 1101 are spaced apart. In some other embodiments, the speaker holes 1101 may also be provided on the rear cover 120 or at other positions on the frame 110, and/or a quantity of speaker holes 1101 may also be less than five or greater than five. A position and a quantity of the speaker holes 1101 are not specifically limited in embodiments of this application.

It should be noted that, orientation words such as "top" and "bottom" used to describe the electronic device 1000 in embodiments of this application are mainly based on an orientation of a user when holding and using the electronic device 1000. When the user holds and uses the electronic device 1000, facing a top portion is referred to as "top", and facing a bottom portion is referred to as "bottom". This does not indicate or imply that an apparatus or a component that is referred to needs to have a specific orientation, or needs to be constructed and operated in a specific orientation. Therefore, it cannot be understood as a limitation on the orientation of the electronic device 1000 in actual application scenarios.

The display module 200 is mounted on a side of the frame 110 facing away from the rear cover 120. In other words, the display module 200 and the rear cover 120 are separately located on two opposite sides of the frame 110. The display module 200 may display information such as an image or a video based on an electrical signal transmitted by the circuit board 300. When the user holds and uses the electronic device 1000, the display module 200 is placed toward the user, and the rear cover 120 is placed facing away from the user. A camera hole 2001 is provided on the display module 200, and the camera hole 2001 runs through the display module 200 in a thickness direction of the display module 200. The camera hole 2001 is located on a top portion of the display module 200.

For example, the display module 200 may be a liquid crystal display (liquid crystal display, LCD) screen, an organic light-emitting diode (organic light-emitting diode, OLED) display screen, an active-matrix organic light-emitting diode (active-matrix organic light-emitting diode, AMOLED) display screen, a mini organic light-emitting diode (mini organic light-emitting diode) display screen, a micro organic light-emitting diode (micro organic light-emitting diode) display screen, a micro organic light-emitting diode (micro organic light-emitting diode) display screen, or a quantum dot light emitting diode (quantum dot light emitting diode, QLED) display screen.

The camera module 400 is located on a top portion of the electronic device 1000. The camera module 400 is used as a front camera module of the electronic device 1000. The camera module 400 may receive the electrical signal transmitted by the circuit board 300, and collect light through the camera hole 2001 based on the electrical signal, to shoot an image or a video. In some other embodiments, the electronic device 1000 may further include another camera module (not shown in the figure), and the another camera module may be used as a rear camera module of the electronic device 1000. In this case, a camera hole (not shown in the figure) may also be provided on the rear cover 120, and an image or a video may be shot through the camera hole of the rear cover 120.

The speaker module 500 is located on a bottom portion of the electronic device 1000. The speaker module 500 is used as a speaker of the electronic device 1000. The speaker module 500 may receive the electrical signal transmitted by the circuit board 300, and vibrate and emit sound based on the electrical signal. The sound emitted by the speaker module 500 may be transmitted to an outer side of the housing 100 through the speaker hole 1101, to implement a sound playback function of the electronic device 1000.

In some other embodiments, the electronic device 1000 may further include another speaker module (not shown in the figure). The another speaker module is located on the top portion of the electronic device 1000, and is used as a receiver of the electronic device 1000. In this case, a receiver hole (not shown in the figure) is further provided on the top portion of the display module 200, and sound emitted by the another speaker module may be transmitted, through the receiver hole, to the outer side of the housing 100, to implement the sound playback function of the electronic device 1000.

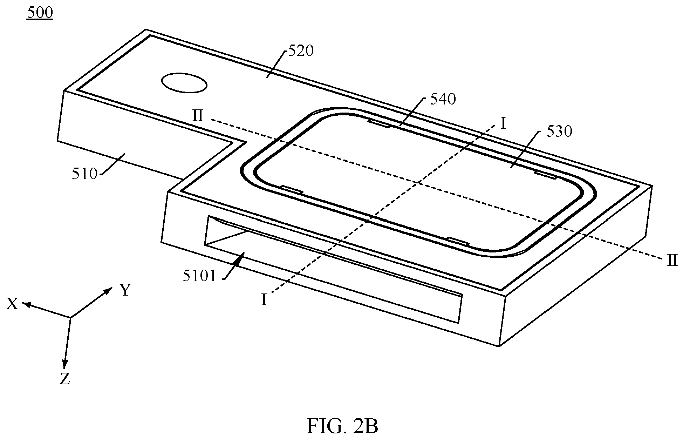

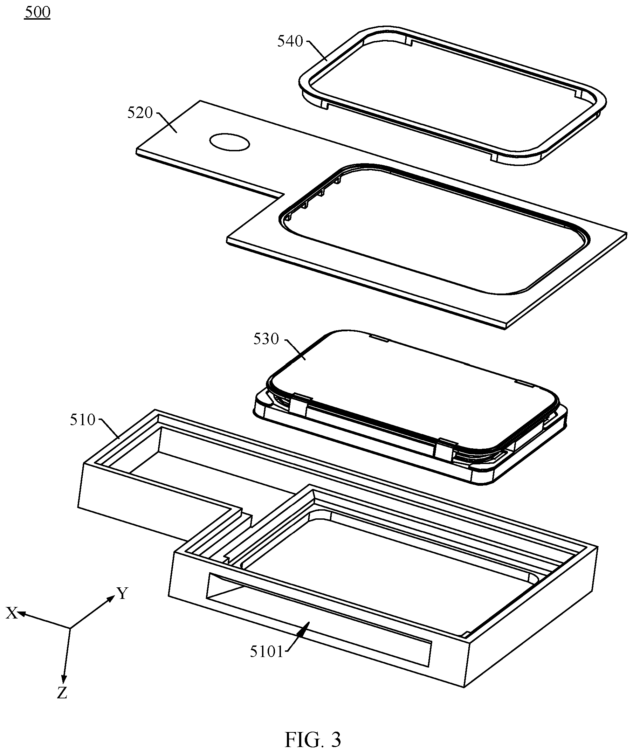

FIG. 2A is a schematic diagram of a structure of a speaker module 500 in the electronic device 1000 shown in FIG. 1. FIG. 2B is a schematic diagram of a structure of the speaker module 500 shown in FIG. 2A from another perspective. FIG. 3 is an exploded structural diagram of the speaker module 500 shown in FIG. 2B. For convenience of description, a length direction of the speaker module 500 is defined as an X-axis direction, a width direction of the speaker module 500 is defined as a Y-axis direction, and a thickness direction of the speaker module 500 is defined as a Z-axis direction. The X-axis direction, the Y-axis direction, and the Z-axis direction are perpendicular to each other.

The speaker module 500 includes a first housing 510, a second housing 520, an electroacoustic transducer 530, a connecting circuit board (not shown in the figure), and an isolation assembly 540. A sound outlet hole 5101 is provided on the first housing 510, and the sound outlet hole 5101 is in communication with the speaker hole 1101 (as shown in FIG. 1). The second housing 520 is mounted in the first housing 510, and is enclosed with the first housing 510 to form a sound cavity (not shown in the figure). The sound cavity is in communication with the sound outlet hole 5101. The electroacoustic transducer 530 is mounted in the sound cavity. One end of the connecting circuit board is located in the sound cavity, and is electrically connected to the electroacoustic transducer 530, and the other end of the connecting circuit board is located outside the sound cavity, and is electrically connected to the circuit board 300 (as shown in FIG. 1). The connecting circuit board may transmit the electrical signal transmitted by the circuit board 300 to the electroacoustic transducer 530, and the electroacoustic transducer 530 may convert the electrical signal into a sound signal. The sound is sequentially transmitted to the outer side of the housing 100 (as shown in FIG. 1) through the sound outlet hole 5101 and the speaker hole 1101, to implement sound emission of the electronic device 1000 (as shown in FIG. 1).

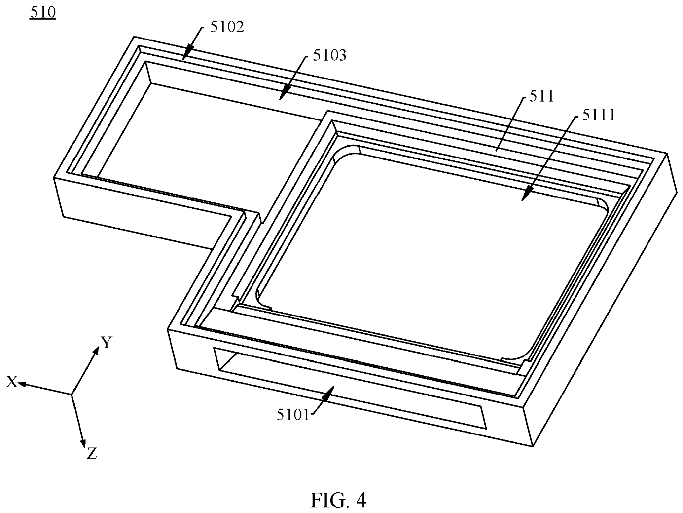

FIG. 4 is a schematic diagram of a structure of a first housing 510 in the speaker module 500 shown in FIG. 3.

The sound outlet hole 5101 includes a first opening (not labeled in the figure) and a second opening (not labeled in the figure) that are provided opposite to each other. The first opening is located on a side surface of the first housing 510. The second opening is located on an inner surface of the first housing 510. A pore size of the sound outlet hole 5101 gradually increases in a direction from the second opening to the first opening. In other words, the sound outlet hole 5101 is in a shape of a speaker, to increase loudness of sound emission of the speaker module 500.

A mounting groove 5102 and an accommodating groove 5103 are provided in the first housing 510. An opening of the mounting groove 5102 is located on a lower surface of the first housing 510. The mounting groove 5102 is recessed in a direction (a positive direction of a Z axis in the figure) from the lower surface of the first housing 510 to an upper surface of the first housing 510. An opening of the accommodating groove 5103 is located on a groove bottom wall surface of the mounting groove 5102. The accommodating groove 5103 is recessed from the groove bottom wall surface of the mounting groove 5102 toward the upper surface of the first housing 510.

A mounting boss 511 protrudes from a groove bottom wall surface of the accommodating groove 5103. The mounting boss 511 protrudes in a direction (a negative direction of a Z axis in the figure) from the groove bottom wall surface of the accommodating groove 5103 to the lower surface of the first housing 510, and is fixedly connected to a groove side wall surface of the accommodating groove 5103. Specifically, the mounting boss 511 is located on a left side of the accommodating groove 5103. A lower surface of the mounting boss 511 is located between the groove bottom wall surface of the mounting groove 5102 and the groove bottom wall surface of the accommodating groove 5103. An accommodating space 5111 is arranged in the mounting boss 511, and an opening of the accommodating space 5111 is located on the lower surface of the mounting boss 511. The accommodating space 5111 is recessed in a direction (a positive direction of a Z axis in the figure) from the lower surface of the mounting boss 511 to the groove bottom wall surface of the accommodating groove 5103. The accommodating space 5111 is in communication with the sound outlet hole 5101.

It should be noted that, orientation words such as "up", "down", "left", "right", "front", and "back" used in this application to describe the speaker module 500 are all based on an orientation of the speaker module 500 shown in FIG. 2A. Facing a positive direction of a Z axis is referred to as "up", facing a negative direction of a Z axis is referred to as "down", facing a negative direction of an X axis is referred to as "left", facing a positive direction of an X axis is referred to as "right", facing a positive direction of a Y axis is referred to as "back", and facing a negative direction of a Y axis is referred to as "front". This does not form a limitation on the speaker module 500 in practical application.

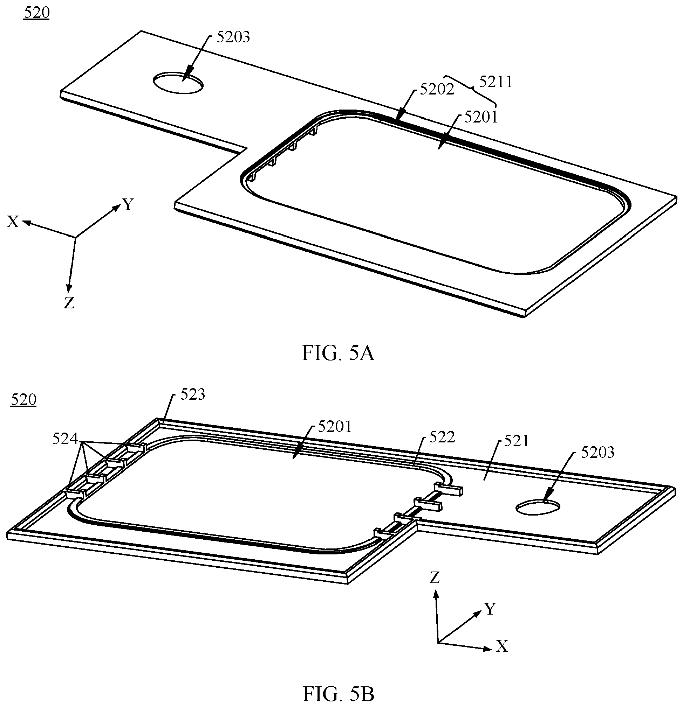

FIG. 5A is a schematic diagram of a structure of a second housing 520 in the speaker module 500 shown in FIG. 3. FIG. 5B is a schematic diagram of a structure of the second housing 520 shown in FIG. 5A from another perspective.

An avoidance hole 5201, a first mounting groove 5202, and an injection hole 5203 are provided in the second housing 520. Both the avoidance hole 5201 and the first mounting groove 5202 are located on a left side of the second housing 520. An opening of the avoidance hole 5201 is located on an upper surface of the second housing 520. The avoidance hole 5201 is recessed in a direction (a negative direction of a Z axis in the figure) from the upper surface of the second housing 520 to a lower surface of the second housing 520, and runs through the lower surface of the second housing 520. In other words, the avoidance hole 5201 runs through the second housing 520 in a thickness direction (a Z-axis direction in the figure) of the second housing 520. The first mounting groove 5202 is provided surrounding the avoidance hole 5201, and is in communication with the avoidance hole 5201. An opening of the first mounting groove 5202 is located on the lower surface of the second housing 520. The first mounting groove 5202 is recessed in a direction (a positive direction of a Z axis in the figure) from the lower surface of the second housing 520 to the upper surface the second housing 520, and runs through a hole wall of the avoidance hole 5201. A groove bottom wall surface of the first mounting groove 5202 is a flat surface.

The injection hole 5203 is located on a right side of the second housing 520, and is spaced apart from the first mounting groove 5202. An opening of the injection hole 5203 is located on the lower surface of the second housing 520. The injection hole 5203 is recessed in a direction (a positive direction of a Z axis in the figure) from the lower surface of the second housing 520 to the upper surface of the second housing 520, and runs through the upper surface of the second housing 520. In other words, the injection hole 5203 runs through the second housing 520 in a thickness direction (a Z-axis direction in the figure) of the second housing 520.

The second housing 520 includes a housing body 521 and a reinforcing member 522. The reinforcing member 522 is fixedly connected to the housing body 521. A mounting through hole 5211 and the injection hole 5203 are provided on the housing body 521. The mounting through hole 5211 runs through the housing body 521 in a thickness direction (a Z-axis direction in the figure) of the housing body 521. The reinforcing member 522 is fixedly connected to an upper surface of the housing body 521, and is arranged surrounding the mounting through hole 5211. The reinforcing member 522 protrudes relative to a hole wall of the mounting through hole 5211, and is enclosed with the hole wall of the mounting through hole 5211 to form the first mounting groove 5202. The avoidance hole 5201 is formed in a middle portion of the mounting through hole 5211, the first mounting groove 5202 is formed at an edge of the mounting through hole 5211, and the groove bottom wall surface of the first mounting groove 5202 is formed on a lower surface of the reinforcing member 522.

In addition, a mounting protruding strip 523 and first positioning posts 524 are further arranged on the housing body 521. The mounting protruding strip 523 and the first positioning posts 524 are all arranged on the upper surface (namely, the upper surface of the second housing 520) of the housing body 521, and all protrude in a direction (a positive direction of a Z axis in the figure) from the upper surface of the housing body 521 to a direction facing away from the lower surface of the housing body 521. Specifically, the mounting protruding strip 523 is arranged at an edge of the upper surface of the second housing 520, and is arranged surrounding the second housing 520. The first positioning posts 524 are connected between the mounting protruding strip 523 and the reinforcing member 522. Surfaces of the first positioning posts 524 that face the avoidance hole 5201 may be flush with a hole wall surface of the avoidance hole 5201.

For example, there are eight first positioning posts 524, and the eight first positioning posts 524 are arranged surrounding the avoidance hole 5201, and are spaced apart from each other. The four first positioning posts 524 are located on a left side of the avoidance hole 5201, and the four first positioning posts 524 are located on a right side of the avoidance hole 5201. In some other embodiments, a quantity of first positioning posts 524 may also be less than eight or greater than eight. A quantity of first positioning posts 524 is not specifically limited in this application.

In this embodiment, the housing body 521 is a plastic member made of a plastic material, and the reinforcing member 522 is a steel sheet made of steel. The housing body 521 and the reinforcing member 522 may be integrally formed. In other words, the second housing 520 is an integrally formed structural member. For example, the second housing 520 may be a structural member formed by in-mold injection molding.

It may be understood that, because the reinforcing member 522 is a steel sheet made of steel, and the lower surface of the reinforcing member 522 forms the groove bottom wall surface of the first mounting groove 5202, structural stability of the first mounting groove 5202 may be ensured, and an overall strength of the second housing 520 may be enhanced.

In some other embodiments, the housing body 521 may also be made of a metal material or another material, and/or the reinforcing member 522 may also be made of another metal material or non-metal material other than steel.

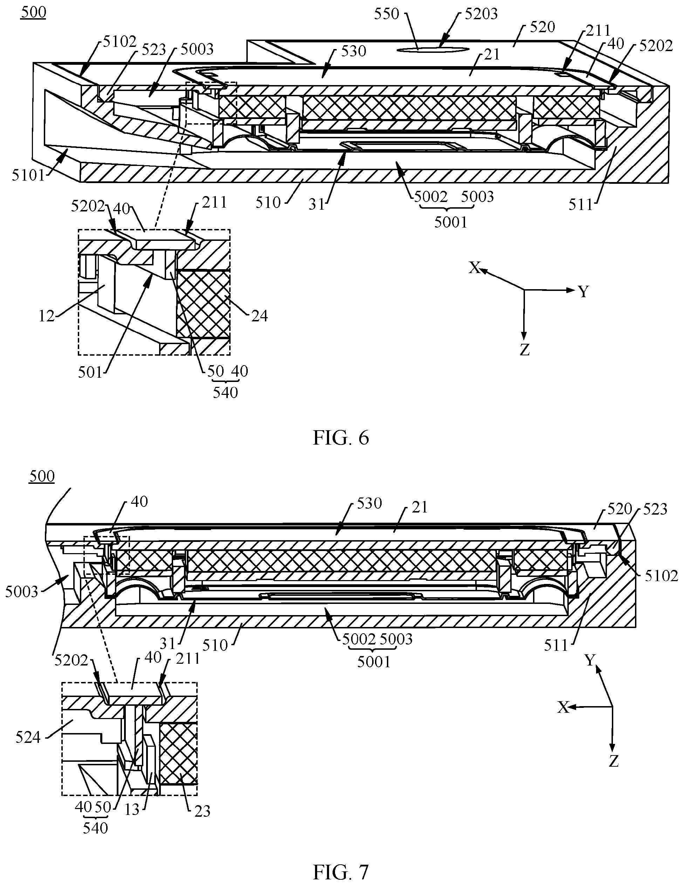

FIG. 6 is a schematic diagram of a structure of the speaker module 500 shown in FIG. 2B cut along I-I. FIG. 7 is a schematic diagram of a structure of the speaker module 500 shown in FIG. 2B cut along II-II. Cutting along I-I means cutting along a flat surface on which I-I is located, and cutting along II-II means cutting along a flat surface on which II-II is located. Similar descriptions below may be understood in the same way.

The second housing 520 is mounted in a mounting groove 5102 of the first housing 510. Specifically, the mounting protruding strip 523 of the second housing 520 is mounted in the mounting groove 5102, so that the second housing 520 and the first housing 510 are relatively fixed, and are enclosed to form a sound cavity 5001. Both the avoidance hole 5201 (as shown in FIG. 5A) and the injection hole 5203 are in communication with the sound cavity 5001. For example, the mounting protruding strip 523 may be mounted on the mounting groove 5102 by ultrasonic welding. In some other embodiments, the mounting protruding strip 523 may also be mounted on the mounting groove 5102 by adhesive connection.

The lower surface of the second housing 520 is flush with the lower surface of the first housing 510. The second housing 520 completely reuses a space of the first housing 510 in a Z-axis direction, to save a size of the speaker module 500 in the Z-axis direction. This helps implement a light and thin design of the speaker module 500. In some other embodiments, the lower surface of the second housing 520 may also be recessed relative to the lower surface of the first housing 510, or the lower surface of the second housing 520 may also protrude relative to the lower surface of the first housing 510.

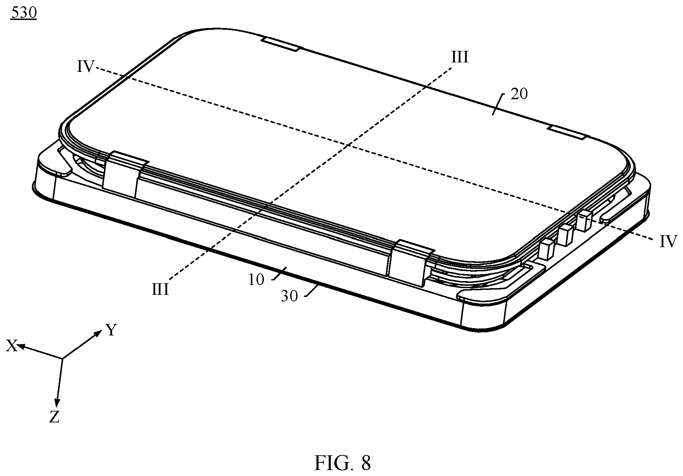

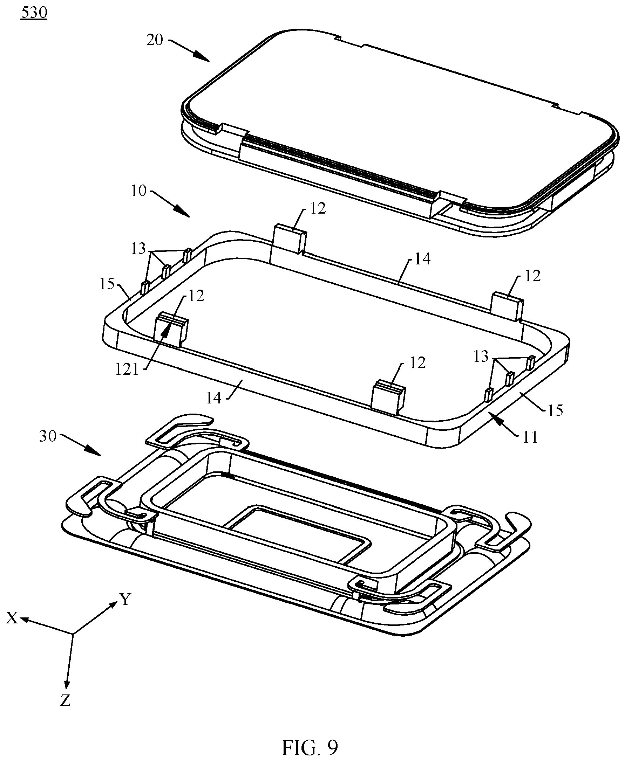

FIG. 8 is a schematic diagram of a structure of an electroacoustic transducer 530 in the speaker module 500 shown in FIG. 3. FIG. 9 is a schematic diagram of an exploded structure of the electroacoustic transducer 530 shown in FIG. 8.

In this embodiment, the electroacoustic transducer 530 is a moving-coil speaker core. The electroacoustic transducer 530 includes a basin frame 10, a magnetic circuit assembly 20, and a vibration assembly 30. The magnetic circuit assembly 20 and the vibration assembly 30 are separately mounted on two opposite sides of the basin frame 10. The basin frame 10 may support the magnetic circuit assembly 20 and the vibration assembly 30. The magnetic circuit assembly 20 may provide a driving magnetic field. The vibration assembly 30 may vibrate relative to the basin frame 10 under an action of the driving magnetic field.

The basin frame 10 includes a basket 11, legs 12, and second positioning posts 13. The legs 12 and the second positioning posts 13 are all fixedly connected to the basket 11. The basket 11, the legs 12, and the second positioning posts 13 may be integrally formed. In other words, the basin frame 10 is an integrally formed structure. In some other embodiments, the basket 11, the legs 12, and the second positioning posts 13 may also form an integrated structure in a manner of being assembled.

The basket 11 is generally in a shape of a square. The basket 11 includes two first baskets 14 and two second baskets 15. Both the two first baskets 14 extend in an X-axis direction, are parallel to each other in a Y-axis direction, and are spaced apart from each other. Both the two second baskets 15 extend in a Y-axis direction, and are parallel to each other in an X-axis direction and are spaced apart from each other. Both the two second baskets 15 are fixedly connected between the two first baskets 14.

The legs 12 and the second positioning posts 13 are all fixedly connected to a lower surface of the basket 11, and all protrude in a direction (a negative direction of a Z axis in the figure) from the lower surface of the basket 11 to a direction facing away from the upper surface of the basket 11. A mounting notch 121 is provided on each of the legs 12, and an opening of the mounting notch 121 is located on a lower surface of each of the legs 12. The mounting notch 121 is recessed in a direction (a positive direction of a Z axis in the figure) from the lower surface of each of the legs 12 to the basket 11, and runs through an outer surface, a left side surface, and a right side surface of each of the legs 12. A groove bottom wall surface of the mounting notch 121 is a flat surface. For example, there are four legs 12, and each two legs 12 are fixedly connected to one first basket 14, and are spaced apart in an X-axis direction.

In some other embodiments, a quantity of legs 12 may be less than four or greater than four, and/or at least a part of legs 12 may also be arranged on the second baskets 15. A quantity and a position of the legs 12 are not specifically limited in this application.

The second positioning posts 13 are spaced apart from the legs 12. An inner surface of each of the second positioning posts 13 is flush with an inner surface of the basket 11. For example, there are six second positioning posts 13. Each three second positioning posts 13 are fixedly connected to one second basket 15, and are spaced apart in a Y-axis direction.

In some other embodiments, a quantity of second positioning posts 13 may also be less than six or greater than six, and/or at least a part of second positioning posts 13 may also be fixedly connected to the first baskets 14. A quantity and a position of the second positioning posts 13 are not specifically limited in this application.

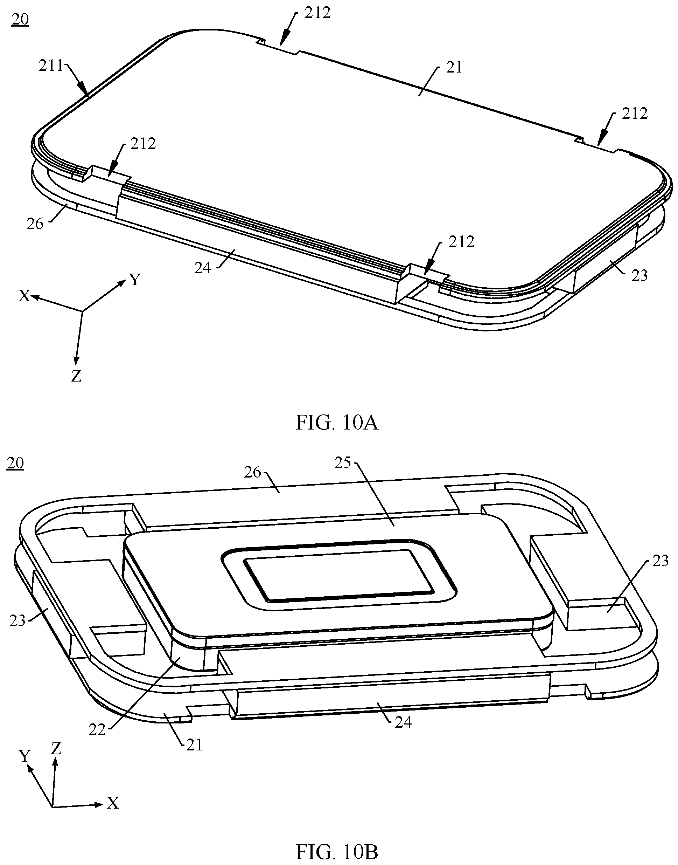

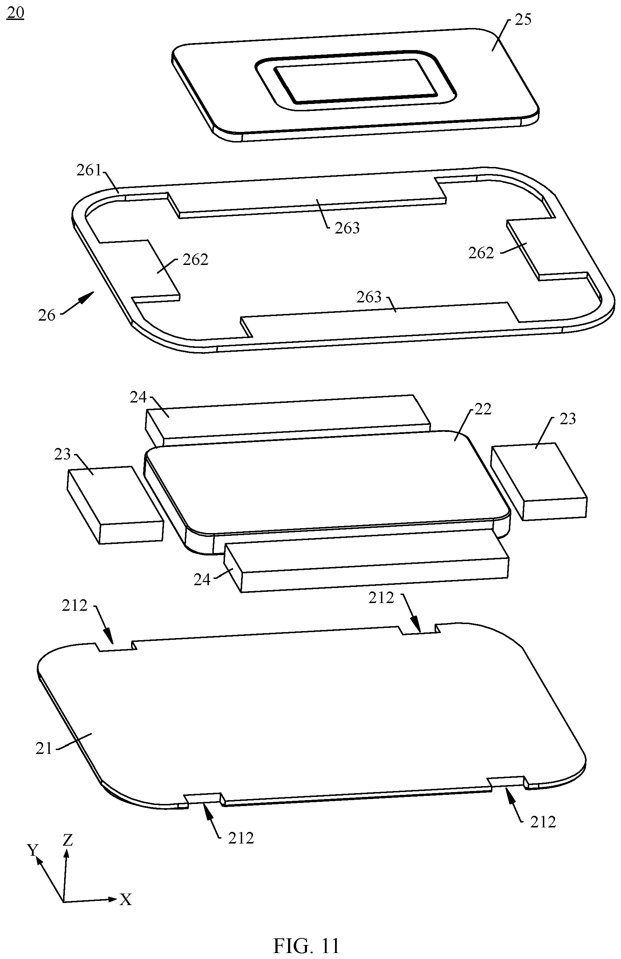

FIG. 10A is a schematic diagram of a structure of a magnetic circuit assembly 20 in the electroacoustic transducer 530 shown in FIG. 9. FIG. 10B is a schematic diagram of a structure of the magnetic circuit assembly 20 shown in FIG. 10A from another perspective. FIG. 11 is a schematic diagram of an exploded structure of the magnetic circuit assembly 20 shown in FIG. 10B.

The magnetic circuit assembly 20 includes a lower pole piece 21, a center magnet 22, two first side magnets 23, two second side magnets 24, a center pole piece 25, and an annular pole piece 26. The center magnet 22, the two first side magnets 23, and the two second side magnets 24 are all mounted on the lower pole piece 21. The center pole piece 25 is mounted on the center magnet 22. The annular pole piece 26 is mounted on the two first side magnets 23 and the two second side magnets 24.

A second mounting groove 211 and clamping notches 212 are provided on the lower pole piece 21. An opening of the second mounting groove 211 is located on a lower surface of the lower pole piece 21. The second mounting groove 211 is recessed in a direction (a positive direction of a Z axis in the figure) from the lower surface of the lower pole piece 21 to the upper surface of the lower pole piece 21, and runs through a peripheral side surface of the lower pole piece 21. The second mounting groove 211 is an annular groove, and is provided surrounding an edge of the lower pole piece 21. A groove bottom wall surface of the second mounting groove 211 is a flat surface.

The clamping notches 212 are in communication with the second mounting groove 211. Openings of the clamping notches 212 are located on the upper surface of the lower pole piece 21. The clamping notches 212 are recessed in a direction from the upper surface of the lower pole piece 21 to the lower surface of the lower pole piece 21, and run through the lower surface of the lower pole piece 21. In other words, the clamping notches 212 run through the lower pole piece 21 in a thickness direction of the lower pole piece 21. In addition, the clamping notches 212 further run through the peripheral side surface of the lower pole piece 21 and a groove wall surface of the second mounting groove 211.

For example, there are four clamping notches 212. Two clamping notches 212 are located on a front side of the lower pole piece 21, and are spaced apart in an X-axis direction. The other two clamping notches 212 are located on a rear side of the lower pole piece 21, and are spaced apart in the X-axis direction. In some other embodiments, the clamping notches 212 may also be located at other positions of the lower pole piece 21, and/or a quantity of clamping notches 212 may also be less than four or greater than four. A position and a quantity of the clamping notches 212 are not specifically limited in embodiments of this application.

The center magnet 22, the two first side magnets 23, and the two second side magnets 24 are all mounted on the upper surface of the lower pole piece 21. Specifically, the center magnet 22 is mounted in a central area of the upper surface of the lower pole piece 21, and the two first side magnets 23 and the two second side magnets 24 are all mounted in an edge area of the upper surface of the lower pole piece 21. In the X-axis direction, the two first side magnets 23 are separately located on two opposite sides of the center magnet 22, and are spaced apart from the center magnet 22. In a Y-axis direction, the two second side magnets 24 are separately located on two opposite sides of the center magnet 22, and are spaced apart from the center magnet 22. Each second side magnet 24 is located between the two clamping notches 212. A first gap (not labeled in the figure) is formed between each first side magnet 23 and the center magnet 22, and a second gap (not labeled in the figure) is formed between each second side magnet 24 and the center magnet 22. For example, the center magnet 22, the two first side magnets 23, and the two second side magnets 24 may all be mounted on the lower pole piece 21 by adhesive connection.

The center pole piece 25 is mounted on an upper surface of the center magnet 22. The annular pole piece 26 is mounted on upper surfaces of the two first side magnets 23 and the two second side magnets 24, is arranged surrounding the center pole piece 25, and is spaced apart from the center pole piece 25. For example, the center pole piece 25 may be mounted on the center magnet 22 by adhesive connection, and the annular pole piece 26 may be mounted on the two first side magnets 23 and the two second side magnets 24 by adhesive connection.

In this embodiment, the annular pole piece 26 includes a connecting frame part 261, two first pole piece parts 262, and two second pole piece parts 263. The two first pole piece parts 262 and the two second pole piece parts 263 are all fixedly connected to an inner surface of the connecting frame part 261. In the X-axis direction, the two first pole piece parts 262 are spaced apart and are arranged opposite to each other. In the Y-axis direction, the two second pole piece parts 263 are spaced apart and are arranged opposite to each other. Specifically, each first pole piece part 262 is mounted on an upper surface of one first side magnet 23, and is spaced apart from the center pole piece 25. Each second pole piece part 263 is mounted on an upper surface of one second side magnet 24, and is spaced apart from the center pole piece 25. A third gap (not labeled in the figure) is formed between each first pole piece part 262 and the center pole piece 25, and the third gap is in communication with the first gap. A fourth gap (not labeled in the figure) is formed between each second pole piece part 263 and the center pole piece 25, and the fourth gap is in communication with the second gap.

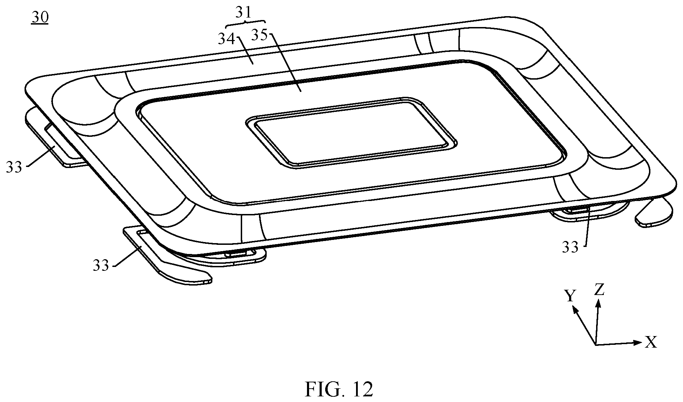

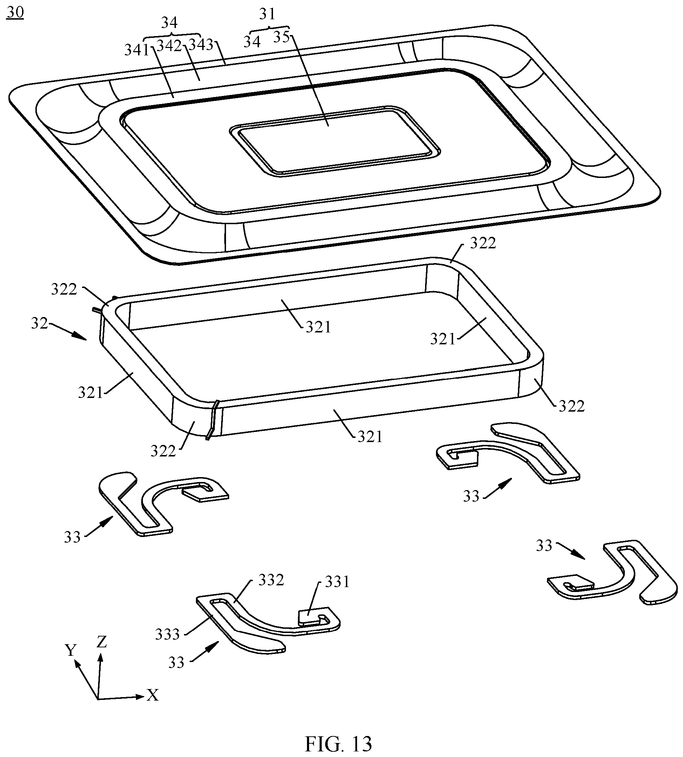

FIG. 12 is a schematic diagram of a structure of a vibration assembly 30 in the electroacoustic transducer 530 shown in FIG. 9 from another perspective. FIG. 13 is a schematic diagram of an exploded structure of the vibration assembly 30 shown in FIG. 12.

The vibration assembly 30 includes a sound membrane 31, a voice coil 32, and four flexible circuit boards 33. The voice coil 32 is fixedly connected to the sound membrane 31, and the four flexible circuit boards 33 are all fixedly connected to the voice coil 32. The sound membrane 31 includes a diaphragm 34 and a dome 35. The dome 35 is fixedly connected to the diaphragm 34. The diaphragm 34 is generally in a shape of a rectangular ring. The diaphragm 34 includes a first fixing part 341, a vibration part 342, and a second fixing part 343. Both the vibration part 342 and the second fixing part 343 are located on an outer side of the first fixing part 341. The vibration part 342 is fixedly connected between the first fixing part 341 and the second fixing part 343. A cross section of the vibration part 342 is formed in an arc shape or approximately an arc shape. For example, the vibration part 342 protrudes in a direction (a negative direction of a Z axis in the figure) facing away from upper surfaces of the first fixing part 341 and the second fixing part 343. In some other embodiments, the vibration part 342 may also protrude in a direction (a positive direction of a Z axis in the figure) facing away from lower surfaces of the first fixing part 341 and the second fixing part 343.

The dome 35 is fixedly connected to the lower surface of the first fixing part 341. When the vibration part 342 is deformed under an action of an external force, the vibration part 342 may drive the first fixing part 341 and the dome 35 to move relative to the second fixing part 343. For example, the dome 35 may be fixedly connected to the first fixing part 341 by adhesive connection. In some other embodiments, the dome 35 may also be fixedly connected to the upper surface of the first fixing part 341.

The voice coil 32 is fixedly connected to a lower surface of the dome 35. In this embodiment, the voice coil 32 is in a shape of a round rectangle. The voice coil 32 includes four straight edge parts 321 and four rounded corner parts 322. Each rounded corner part 322 is fixedly connected between two straight edge parts 321.

The four flexible circuit boards 33 are separately fixedly connected to the four rounded corner parts 322 of the voice coil 32. In this embodiment, the four flexible circuit boards 33 have the same structure. Each flexible circuit board 33 includes a first fixing part 331, a connecting branch 332, and a second fixing part 333. Both the connecting branch 332 and the second fixing part 333 are located on an outer side of the first fixing part 331, and the connecting branch 332 is fixedly connected between the first fixing part 331 and the second fixing part 333. The first fixing part 331 of each flexible circuit board 33 is fixedly connected to one rounded corner part 322 of the voice coil 32.

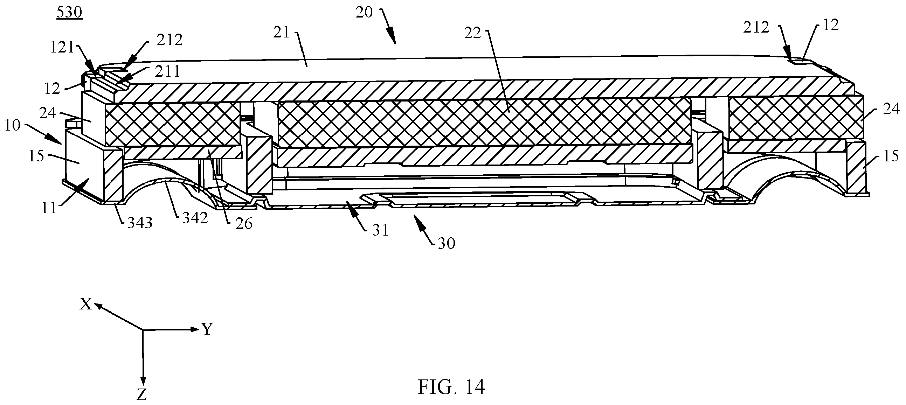

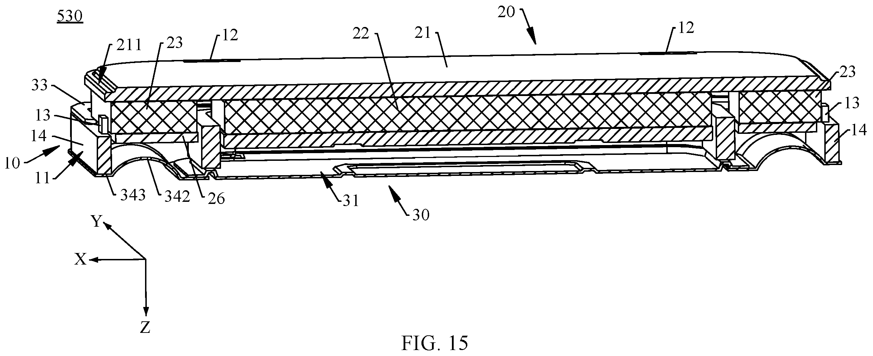

FIG. 14 is a schematic diagram of a cross-sectional structure of the electroacoustic transducer 530 shown in FIG. 8 cut along III-III. FIG. 15 is a schematic diagram of a cross-sectional structure of the electroacoustic transducer 530 shown in FIG. 8 cut along IV-IV

The magnetic circuit assembly 20 is mounted on a lower side of the basin frame 10. Specifically, the lower pole piece 21 is fixedly connected to four legs 12, and is spaced apart from the basket 11. An end of each leg 12 away from the basket 11 is clamped into one clamping notch 212 of the lower pole piece 21, and is fixedly connected to the lower pole piece 21. In addition, a mounting notch 121 of each of the legs 12 is in communication with the second mounting groove 211 of the lower pole piece 21.

The center magnet 22, the two first side magnets 23, and the two second side magnets 24 are all located on a side of the lower pole piece 21 facing the basket 11. Specifically, the two first side magnets 23 are located between the two first baskets 14, and the two second side magnets 24 are separately located on top sides of the two second baskets 15. The second positioning posts 13 are located at an edge of the electroacoustic transducer 530, and are spaced apart from the first side magnets 23.

The vibration assembly 30 is mounted on an upper side of the basin frame 10. Specifically, the sound membrane 31 is fixedly connected to the upper surface of the basket 11, and is spaced apart from the lower pole piece 21. A second fixing part 343 of the diaphragm 34 is fixedly connected to the upper surface of the basket 11. A vibration part 342 of the diaphragm 34 protrudes toward a direction of the basin frame 10, and is spaced apart from the annular pole piece 26. For example, the second fixing part 343 of the diaphragm 34 may be fixedly connected to the upper surface of the basket 11 by adhesive connection.

The voice coil 32 is located on an inner side of the basket 11. An end of the voice coil 32 away from the sound membrane 31 is partially located in the first gap and the third gap, and is partially located in the second gap and the fourth gap. In other words, the end of the voice coil 32 away from the sound membrane 31 is located in a magnetic field provided by the magnetic circuit assembly 20. Second fixing parts 343 (as shown in FIG. 13) of the four flexible circuit boards 33 are located at four corners of the basket 11, and are fixedly connected to the lower surface of the basket 11. The four flexible circuit boards 33 are all electrically connected to a connecting circuit board of the speaker module 500. The four flexible circuit boards 33 transmit the electrical signal transmitted by the connecting circuit board to the voice coil 32. The voice coil 32 moves up and down in a Z-axis direction to cut magnetic field lines of the magnetic field provided by the magnetic circuit assembly 20, thereby driving the sound membrane 31 and the flexible circuit boards 33 to vibrate.

Referring to FIG. 6 and FIG. 7, the electroacoustic transducer 530 is mounted on the first housing 510. Specifically, the electroacoustic transducer 530 is mounted in the accommodating groove 5103 (as shown in FIG. 4). The electroacoustic transducer 530 is mounted on the mounting boss 511. The basin frame 10 is mounted in the accommodating space 5111 (as shown in FIG. 4), and the second positioning posts 13 are spaced apart from the first positioning posts 524 of the second housing 520. For example, a size of a gap between each of the second positioning posts 13 and each of the first positioning posts 524 of the second housing 520 is less than 0.3 mm.

The lower pole piece 21 runs through the avoidance hole 5201 (as shown in FIG. 5A), and is spaced apart from a hole wall of the avoidance hole 5201. The lower surface of the lower pole piece 21 is exposed relative to the lower surface of the second housing 520. For example, the lower surface of the lower pole piece 21 is flush with the lower surface of the second housing 520, so that the electroacoustic transducer 530 completely reuses a space of the first housing 510 and the second housing 520 in a Z-axis direction. This helps implement a light and thin design of the speaker module 500.

In some other embodiments, the lower surface of the lower pole piece 21 may also be located on a lower side of the lower surface of the second housing 520. In other words, the lower surface of the lower pole piece 21 is recessed relative to the lower surface of the second housing 520. Alternatively, the lower pole piece 21 may also be located on an upper side of the lower surface of the second housing 520. In other words, the lower surface of the lower pole piece 21 protrudes relative to the lower surface of the second housing 520.

The sound membrane 31 is located in the accommodating space 5111. The sound membrane 31 divides the sound cavity 5001 into a front sound cavity 5002 and a rear sound cavity 5003. The front sound cavity 5002 is formed between the sound membrane 31 and the first housing 510. The front sound cavity 5002 is in communication with the sound outlet hole 5101. The rear sound cavity 5003 is formed on a side of the sound membrane 31 facing away from the front sound cavity 5002. The rear sound cavity 5003 and the avoidance hole 5201 are in communication with the injection hole 5203.

In addition, a leakage hole (not shown in the figure) is further provided on the first housing 510 or the second housing 520. The leakage hole is in communication with the rear sound cavity 5003 and the outside of the speaker module 500, so that the rear sound cavity 5003 is in communication with the outside of the speaker module 500, to ensure an air pressure balance between the rear sound cavity 5003 and the outside of the speaker module 500, and avoid deformation of the sound membrane 31 caused by problems such as an unstable air pressure from affecting sound quality of the speaker module 500. This improves a sound quality experience of the speaker module 500.

In this embodiment, the rear sound cavity 5003 is filled with sound-absorbing particles (not shown in the figure). The sound-absorbing particles may expand a volume of the rear sound cavity 5003, and improve sound quality of the speaker module 500. A particle size of each of the sound-absorbing particles is greater than a size of a gap between each of the second positioning posts 13 and each of the first positioning posts 524 of the second housing 520. For example, the sound-absorbing particles may be bass powder, and the particle size of each of the sound-absorbing particles is between 0.2 mm and 0.3 mm.

The sound-absorbing particles may be injected into the rear sound cavity 5003 from the injection hole 5203. In addition, the speaker module 500 further includes a sealing member 550. After the sound-absorbing particles are injected into the rear sound cavity 5003 from the injection hole 5203, the sealing member 550 seals the injection hole 5203, to prevent the sound-absorbing particles from leaking out. For example, the sealing member 550 may be made of materials such as plastic, and the like.

It may be understood that, in the speaker module 500 shown in this embodiment, both the second housing 520 and the electroacoustic transducer 530 completely reuse a space of the first housing 510 in a thickness direction (a Z-axis direction in the figure) of the speaker module 500, which is equivalent to reducing a space occupied by the second housing 520 and the electroacoustic transducer 530 in the thickness direction of the speaker module 500. This is beneficial to implementing a light and thin design of the speaker module 500.

In addition, the rear sound cavity 5003 is filled with the sound-absorbing particles, implementing acoustic expansion of the rear sound cavity 5003, which is equivalent to expanding a volume of the rear sound cavity 5003. This helps implement better low-frequency speaker performance of the speaker module 500, and improves a sound effect experience of the speaker module 500.

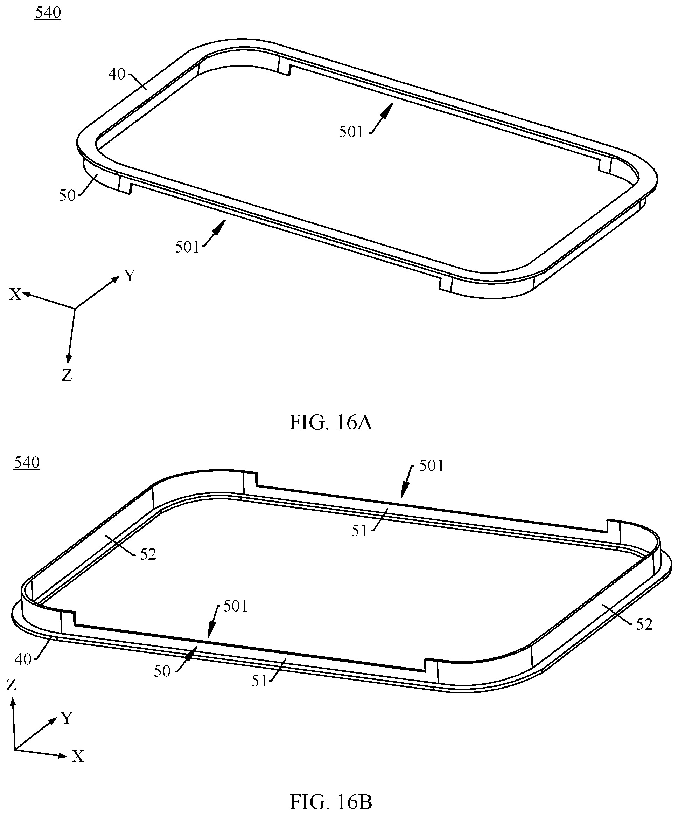

FIG. 16A is a schematic diagram of a structure of an isolation assembly 540 in the speaker module 500 shown in FIG. 3 in an implementation. FIG. 16B is a schematic diagram of a structure of the isolation assembly 540 shown in FIG. 16A from another perspective.

The isolation assembly 540 includes a fixing ring 40 and a breathable isolating member 50. The breathable isolating member 50 is fixedly connected to the fixing ring 40. In this embodiment, the fixing ring 40 is generally in a shape of a rectangular ring. The fixing ring 40 may be a steel sheet made of steel, and a thickness of the fixing ring 40 is 0.1 mm. In some other embodiments, the fixing ring 40 may also be made of materials such as plastic, and/or a thickness of the fixing ring 40 may also be greater than 0.1 mm or less than 0.1 mm. A material and a thickness of the fixing ring 40 is not specifically limited in this application.

The breathable isolating member 50 is fixedly connected to an upper surface of the fixing ring 40. A plurality of breathable holes (not shown in the figure) are provided on the breathable isolating member 50. The plurality of breathable holes all run through the breathable isolating member 50 in a thickness direction of the breathable isolating member 50, and are spaced apart from each other. Air may circulate between an inner side and an outer side of the breathable isolating member 50 from the plurality of breathable holes. A pore size of each of the breathable holes is 0.1 mm. In some other embodiments, the pore size of each of the breathable holes may also be another value, provided that the pore size of each of the breathable holes is less than the pore size of each of the sound-absorbing particles.

In this embodiment, the breathable isolating member 50 is in a shape of a cylinder. The breathable isolating member 50 includes two first isolation parts 51 and two second isolation parts 52. Both the two first isolation parts 51 extend in an X-axis direction, are spaced apart in a Y-axis direction, and are arranged opposite to each other. Both the two second isolation parts 52 extend in the Y-axis direction, are spaced apart in the X-axis direction, and are arranged opposite to each other. Both the two second isolation parts 52 are fixedly connected between the two first isolation parts 51. One avoidance notch 501 is provided on each first isolation part 51. The avoidance notch 501 runs through the first isolation part 51 in the thickness direction of the first isolation part 51, and runs through a lower surface of the first isolation part 51.

In some other embodiments, the avoidance notch 501 may also not be provided on the first isolation part 51, and/or the avoidance notch 501 may also be provided on the second isolation part 52. In this case, the avoidance notch 501 runs through the second isolation part 52 in a thickness direction of the second isolation part 52, and runs through a lower surface of the second isolation part 52. A quantity and a position of the avoidance notch 501 is not specifically limited in embodiments of this application.

In this embodiment, the breathable isolating member 50 is a metal mesh made of a metal material. The breathable holes are mesh holes of the metal mesh. The breathable isolating member 50 is fixedly connected to an upper surface of the fixing ring 40 by welding. An angle between the breathable isolating member 50 and the fixing ring 40 is 90 degrees. In some other embodiments, the breathable isolating member 50 may also be a sheet-shaped structure made of a metal material or another material. In this case, through holes may be drilled on the breathable isolating member 50 to form breathable holes.

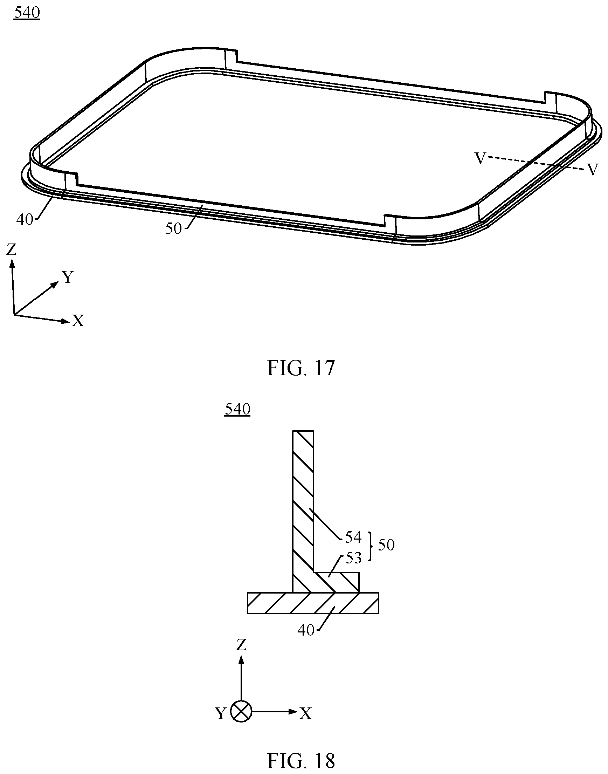

FIG. 17 is a schematic diagram of a structure of an isolation assembly 540 in the speaker module 500 shown in FIG. 3 in another implementation. FIG. 18 is a schematic diagram of a cross-sectional structure of the isolation assembly 540 shown in FIG. 17 cut along V-V.

A difference between the isolation assembly 540 shown in this implementation and the isolation assembly 540 shown in the foregoing implementation is: The breathable isolating member 50 includes a fixing part 53 and an isolation part 54. The isolation part 54 is fixedly connected to an upper surface of the fixing part 53. An angle between the isolation part 54 and the fixing part 53 is 90 degrees. For example, the breathable isolating member 50 may be formed by bending a metal mesh. Specifically, the fixing part 53 is fixedly connected to an upper surface of the fixing ring 40, and the isolation part 54 is fixedly connected to a side of the fixing part 53 away from the fixing ring 40.

It may be understood that, compared with the isolation assembly 540 shown in the foregoing implementation, in the isolation assembly 540 shown in this implementation, a contact area between the breathable isolating member 50 and the fixing ring 40 becomes larger. This is beneficial to improving assembly stability between the breathable isolating member 50 and the fixing ring 40.

Referring to FIG. 6 and FIG. 7, the isolation assembly 540 is mounted on the second housing 520 and the lower pole piece 21 of the electroacoustic transducer 530, and is arranged surrounding an edge of the lower pole piece 21. Specifically, the fixing ring 40 is mounted in the first mounting groove 5202 of the second housing 520, the mounting notch 121 (as shown in FIG. 9) of each of the legs 12, and the second mounting groove 211 of the lower pole piece 21. The lower surface of the fixing ring 40 is flush with the lower surface of the second housing 520 and the lower surface of the lower pole piece 21, so that the fixing ring 40 completely reuses a thickness of the second housing 520 in the Z-axis direction, to prevent the lower surface of the fixing ring 40 from protruding relative to the lower surface of the second housing 520 and the lower surface of the lower pole piece 21. This helps implement a light and thin design of the speaker module 500.

In some other embodiments, the lower surface of the fixing ring 40 may also be located on an upper side of the lower surface of the second housing 520 or an upper side of the lower surface of the lower pole piece 21, provided that the lower surface of the fixing ring 40 does not protrude relative to the lower surface of the second housing 520 and the lower surface of the lower pole piece 21.

In addition, the speaker module 500 further includes an adhesive layer (not shown in the figure). A part of the adhesive layer is adhesively connected between the upper surface of the fixing ring 40 and the groove bottom wall surface of the first mounting groove 5202. A part of the adhesive layer is adhesively connected between the upper surface of the fixing ring 40 and the groove bottom wall surface of the second mounting groove 211. A part of the adhesive layer is adhesively connected between the upper surface of the fixing ring 40 and the groove bottom wall surface of the mounting notch 121. In other words, the fixing ring 40 is mounted on the groove bottom wall surface of the first mounting groove 5202 and the groove bottom wall surface of the second mounting groove 211 by adhesive connection, to mount the fixing ring 40 in the first mounting groove 5202 and the second mounting groove 211.

It should be understood that, because the groove bottom wall surface of the first mounting groove 5202, the groove bottom wall surface of the second mounting groove 211, and the groove bottom wall surface of the mounting notch 121 are all flat surfaces, when the fixing ring 40 is mounted by using the adhesive layer, glue is easy to apply and flatten. In this way, high-quality adhesive connection between the fixing ring 40 and the second housing 520 and the lower pole piece 21 may be implemented, and a problem of glue overflow in an adhesive connection process may be further avoided. This is beneficial to implementing an ultra-thin design of the speaker module 500.

In some other embodiments, the fixing ring 40 may also be mounted in the first mounting groove 5202 and the second mounting groove 211 by welding, or the fixing ring 40 and the second housing 520 may also be integrally formed. In this case, the fixing ring 40 and the reinforcing member 522 (as shown in FIG. 5B) of the second housing 520 may be integrally formed. In other words, the fixing ring 40 and the reinforcing member 522 may be different parts of one component, to simplify a manufacturing process of the speaker module 500, and reduce a production cost of the speaker module.

The breathable isolating member 50 is located between a hole wall of the avoidance hole 5201 (as shown in FIG. 5A) and the lower pole piece 21. The breathable isolating member 50 surrounds the electroacoustic transducer 530, and is spaced apart from the electroacoustic transducer 530. The breathable isolating member 50 isolates the sound-absorbing particles and the electroacoustic transducer 530, which prevents the sound-absorbing particles from entering the electroacoustic transducer 530 and affecting a sound quality effect of the electroacoustic transducer 530. It may be understood that, because the pore size of each of the breathable holes is less than the particle size of each of the sound-absorbing particles, the breathable isolating member 50 may prevent the sound-absorbing particles from passing through the breathable isolating member 50 and entering the inside of the electroacoustic transducer 530 while ensuring air circulation.

In this embodiment, the breathable isolating member 50 is located on a lower side of the basket 11 of the basin frame 10, and is arranged surrounding the lower pole piece 21 and the two first side magnets 23. The breathable isolating member 50 is spaced apart from the basket 11, so that a connecting circuit board extends into the electroacoustic transducer 530 through a gap between the breathable isolating member 50 and the basket 11 and is electrically connected to the flexible circuit board 33. A size of a gap between the upper surface of the breathable isolating member 50 and the basket 11 is less than the particle size of each of the sound-absorbing particles, for example, less than 0.1 mm. This may prevent the sound-absorbing particles from entering the inside of the electroacoustic transducer 530 from the gap between the breathable isolating member 50 and the basket 11, and ensure sound quality of the speaker module 500.

In some other embodiments, a through hole (not shown in the figure) may also be provided on the basket 11, and the flexible circuit board 33 may be electrically connected to the connecting circuit board of the speaker module 500 through the through hole of the basket 11, and/or the breathable isolating member 50 may also be located on an outer side of the basket 11 of the basin frame 10, and is spaced apart from the basket 11. A position of the breathable isolating member 50 is not specifically limited in embodiments of this application, provided that the breathable isolating member 50 may isolate the sound-absorbing particles and the electroacoustic transducer 530.

The two first isolation parts 51 (as shown in FIG. 16B) of the breathable isolating member 50 are separately located on lower sides of the two first baskets 14 (as shown in FIG. 9) of the basket 11. The two second isolation parts 52 (as shown in FIG. 16B) are separately located on lower sides of the two second baskets 15 (as shown in FIG. 9) of the basket 11. Each avoidance notch 501 may avoid two legs 12 and one second side magnet 24 that is located between the two legs 12. First positioning posts 524 of the second housing 520 are located on an outer side of the breathable isolating member 50, and are spaced apart from the breathable isolating member 50, to prevent the breathable isolating member 50 from being deformed in a direction facing away from the electroacoustic transducer 530, and ensure use reliability of the breathable isolating member 50. Second positioning posts 13 are located on an inner side of the breathable isolating member 50, and are spaced apart from the breathable isolating member 50, to prevent the breathable isolating member 50 from being deformed toward a direction of the electroacoustic transducer 530. This not only ensures use reliability of the breathable isolating member 50, but also prevents a deformed breathable isolating member 50 from entering the inside of the electroacoustic transducer 530, causing noise or abnormal vibration.

In addition, positioning of the breathable isolating member 50 is implemented through the first positioning posts 524 and the second positioning posts 13 that are located on two sides. An end of the breathable isolating member 50 away from the fixing ring 40 does not need to be fixed with glue. This avoids a problem of blocking the breathable holes by the glue and affecting vent efficiency, and improves breathability of the breathable isolating member 50. In addition, because the size of the gap between each of the first positioning posts 524 and each of the second positioning posts 13 is less than the particle size of each of the sound-absorbing particles, even if the breathable isolating member 50 is deformed in a direction facing away from the electroacoustic transducer 530 or toward a direction facing away from the electroacoustic transducer 530, the sound-absorbing particles also cannot enter the electroacoustic transducer 530 through the gap between each of the first positioning posts 524 and each of the second positioning posts 13. This ensures a sound quality experience of the speaker module 500.

It may be understood that, in some other embodiments, the second positioning posts 13 may also be arranged on other components of the electroacoustic transducer 530 such as the lower pole piece 21, the first side magnet 23, or the second side magnet 24, provided that the second positioning posts 13 are located on an inner side of the breathable isolating member 50, and can prevent the breathable isolating member 50 from being deformed toward a direction of the electroacoustic transducer 530.

When the speaker module 500 shown in embodiments of this application is assembled, the electroacoustic transducer 530 is first mounted in the accommodating groove 5103 of the first housing 510, then the second housing 520 is mounted in the mounting groove 5102 of the first housing 510, then the isolation assembly 540 is mounted on the second housing 520 and the electroacoustic transducer 530, and then the sound-absorbing particles are filled into the rear sound cavity 5003 through the injection hole 5203 of the second housing 520. After filling of the sound-absorbing particles is completed, the injection hole 5203 is sealed with the sealing member 550. In this way, the assembly of the speaker module 500 is completed.

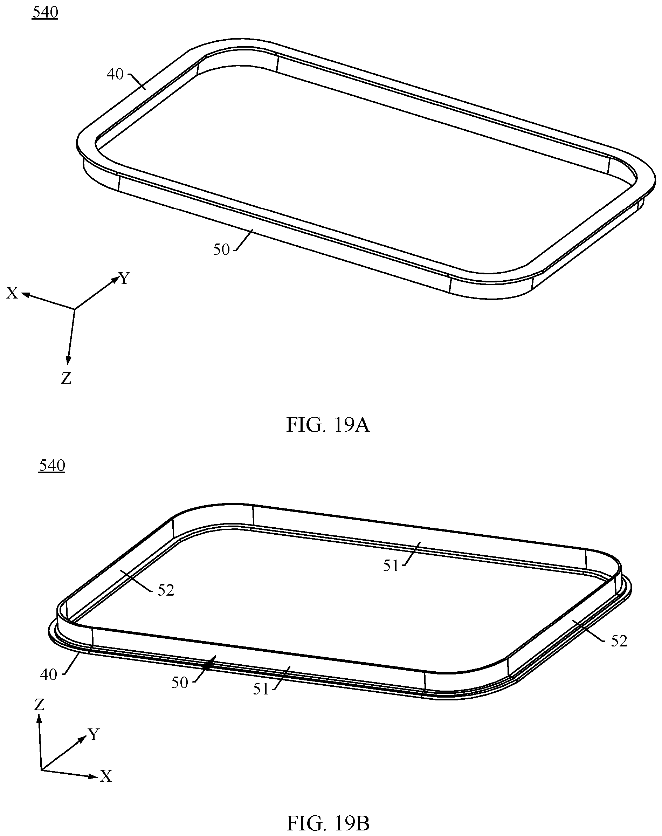

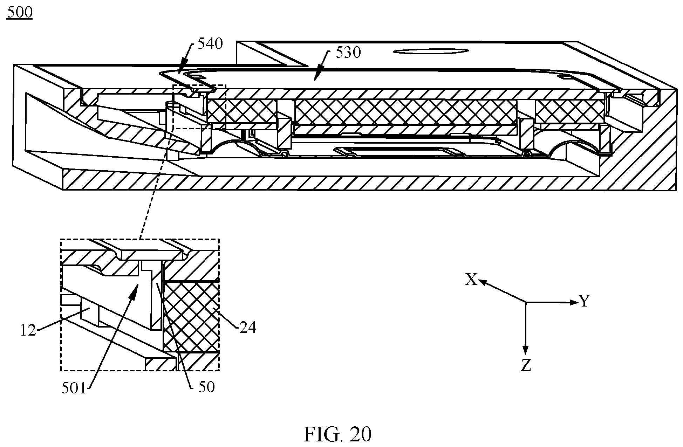

FIG. 19A is a schematic diagram of a structure of an isolation assembly 540 of a speaker module in a second electronic device according to an embodiment of this application. FIG. 19B is a schematic diagram of a structure of the isolation assembly 540 shown in FIG. 19A from another perspective. FIG. 20 is a schematic diagram of a structure of a speaker module 500 cut along I-I in a second electronic device according to an embodiment of this application.

A difference between the isolation assembly 540 shown in this embodiment and the isolation assembly 540 shown in the foregoing embodiment is: An avoidance notch is not provided on the breathable isolating member 50. The breathable isolating member 50 is arranged surrounding the electroacoustic transducer 530. Specifically, the breathable isolating member 50 is arranged surrounding the lower pole piece 21, the two first side magnets 23 (as shown in FIG. 7), and the two second side magnets 24. Each first isolation part 51 is located on the two legs 12 and an outer side of one second side magnet 24 located between the two legs 12. Each second isolation part 52 is located on an outer side of one first side magnet 23.

It should be understood that, in the existing speaker module, the breathable isolating member is often adhesively connected to a bottom surface of the electroacoustic transducer, occupying a height of the electroacoustic transducer, which not only causes a thickness of the electroacoustic transducer and a thickness of speaker module to increase, but also affects a size of a magnetic circuit and performance of a magnetic circuit in the electroacoustic transducer, and also affects a sealing size between the electroacoustic transducer and the second housing.

In the speaker module 500 shown in this application, the breathable isolating member 50 and the fixing ring 40 are predetermined to be fixed, and the breathable isolating member 50 is not directly assembled to the electroacoustic transducer 530, which not only does not affect a size of the electroacoustic transducer 530, but also helps implement a light and thin design of the speaker module 500. This may further avoid an impact of the breathable isolating member 50 on a size of a magnetic circuit and performance of a magnetic circuit, and helps improve a sound quality experience of the speaker module 500. In addition, because the fixing ring 40 is a steel ring made of steel, the fixing ring 40 has a high strength and therefore can be processed very thin, and a height of the breathable isolating member 50 can be increased, thereby increasing a vent volume of the breathable isolating member 50.

The foregoing content are merely specific implementations of this application, but are not intended to limit the protection scope of this application. Therefore, the protection scope of this application shall be subject to the protection scope of the appended claims.

## Claims

1. A speaker module (500), comprising:
a first housing (510);
a second housing (520), wherein the second housing (520) is mounted in the first housing (510), and is enclosed with the first housing (510) to form a sound cavity (5001), an avoidance hole (5201) is provided on the second housing (520), and the avoidance hole (5201) is in communication with the sound cavity (5001) and an outer side of the second housing (520);
an electroacoustic transducer (530), wherein the electroacoustic transducer (530) is mounted in the sound cavity (5001), the electroacoustic transducer (530) comprises a lower pole piece (21) and a sound membrane (31), the lower pole piece (21) runs through the avoidance hole (5201), and is spaced apart from a hole wall of the avoidance hole (5201), and the sound membrane (31) is spaced apart from the lower pole piece (21), and divides the sound cavity (5001) into a front sound cavity (5002) and a rear sound cavity (5003);
sound-absorbing particles, wherein the sound-absorbing particles are filled in the rear sound cavity (5003);
a fixing ring (40), wherein the fixing ring (40) is mounted between the second housing (520) and the lower pole piece (21), and is arranged surrounding an edge of the lower pole piece (21); and
a breathable isolating member (50), wherein the breathable isolating member (50) is fixedly connected to an upper surface of the fixing ring (40), and is located between the hole wall of the avoidance hole (5201) and the lower pole piece (21), and the breathable isolating member (50) is arranged surrounding the electroacoustic transducer (530), and is configured to isolate the sound-absorbing particles and the electroacoustic transducer (530), and
wherein the electroacoustic transducer (530) further comprises a basin frame (10), the basin frame (10) comprises a basket (11), the basket (11) is located between the lower pole piece (21) and the sound membrane (31), the breathable isolating member (50) is located on a lower side of the basket (11), and is spaced apart from the basket (11),
**characterized in that**
a size of a gap between the breathable isolating member (50) and the basket (11) is less than a particle size of each of the sound-absorbing particles.

2. The speaker module (500) according to claim 1, wherein a first mounting groove (5202) is provided on the second housing (520), an opening of the first mounting groove (5202) is located on a lower surface of the second housing (520), the first mounting groove (5202) is provided surrounding the avoidance hole (5201), and runs through the hole wall of the avoidance hole (5201), a second mounting groove (211) is provided on the lower pole piece (21), an opening of the second mounting groove (211) is located on a lower surface of the lower pole piece (21), the second mounting groove (211) is provided surrounding the edge of the lower pole piece (21), and runs through a peripheral side surface of the lower pole piece (21), and the fixing ring (40) is mounted between the first mounting groove (5202) and the second mounting groove (211).

3. The speaker module (500) according to claim 2, wherein a lower surface of the fixing ring (40) is flush with the lower surface of the second housing (520), or a lower surface of the fixing ring (40) is located on an upper side of the lower surface of the second housing (520).

4. The speaker module (500) according to claim 2 or 3, wherein the lower surface of the fixing ring (40) is flush with the lower surface of the lower pole piece (21), or the lower surface of the fixing ring (40) is located on an upper side of the lower surface of the lower pole piece (21).

5. The speaker module (500) according to any one of claims 2 to 4, wherein both a groove bottom wall surface of the first mounting groove (5202) and a groove bottom wall surface of the second mounting groove (211) are flat surfaces, the speaker (500) module further comprises an adhesive layer, a part of the adhesive layer is adhesively connected between the upper surface of the fixing ring (40) and the groove bottom wall surface of the first mounting groove (5202), and a part of the adhesive layer is adhesively connected between the upper surface of the fixing ring (40) and the groove bottom wall surface of the second mounting groove (211).

6. The speaker module (500) according to any one of claims 2 to 5, wherein the second housing (520) comprises a housing body (521) and a reinforcing member (522), a mounting through hole (5211) is provided on the housing body (521), the mounting through hole (5211) runs through the housing body (521) in a thickness direction of the housing body (521), the reinforcing member (522) is fixedly connected to an upper surface of the housing body (521), and is arranged surrounding the mounting through hole (5211), and a part of the reinforcing member (522) protrudes relative to a hole wall of the mounting through hole (5211), and is enclosed with the hole wall of the mounting through hole (5211) to form the first mounting groove (5202).

7. The speaker module (500) according to claim 6, wherein the housing body (521) is made of plastic, the reinforcing member (522) is made of metal, and the housing body (521) and the reinforcing member (522) are integrally formed.

8. The speaker module (500) according to claim 1, wherein a plurality of first positioning posts (524) are arranged on the second housing (520), the plurality of first positioning posts (524) are arranged on an upper surface of the second housing (520), and are spaced apart surrounding the avoidance hole (5201), and the plurality of first positioning posts (524) are located on an outer side of the breathable isolating member (50), and are spaced apart from the breathable isolating member (50).

9. The speaker module (500) according to claim 8, wherein a plurality of second positioning posts (13) are arranged on the electroacoustic transducer (530), the plurality of second positioning posts (13) are located at an edge of the electroacoustic transducer (530), and are spaced apart from each other, and the plurality of second positioning posts (13) are located on an inner side of the breathable isolating member (50), and are spaced apart from the breathable isolating member (50).

10. The speaker module (500) according to claim 9, wherein a size of a gap between each of the second positioning posts (13) and each of the first positioning posts (524) is less than the particle size of each of the sound-absorbing particles.

11. The speaker module (500) according to claim 9 or 10, wherein the plurality of second positioning posts (13) are fixedly connected to a lower surface of the basket (11).

12. The speaker module (500) according to any one of claims 1 to 11, wherein the electroacoustic transducer (530) further comprises two first side magnets (23), and both the two first side magnets (23) are mounted on an upper surface of the lower pole piece (21), are spaced apart, and are arranged opposite to each other; and
two avoidance notches (501) are provided on the breathable isolating member (50), both the two avoidance notches (501) run through the breathable isolating member (50) in a thickness direction of the breathable isolating member (50), and run through an upper surface of the breathable isolating member (50), and the two avoidance notches (501) are spaced apart and are provided opposite to each other, and are separately configured to avoid the two first side magnets (23).

13. The speaker module (500) according to any one of claims 1 to 12, wherein a plurality of breathable holes are provided on the breathable isolating member (50), each of the breathable holes runs through the breathable isolating member (50) in the thickness direction of the breathable isolating member (50), and a pore size of each of the breathable holes is less than the particle size of each of the sound-absorbing particles.

14. An electronic device (1000), comprising a housing (100) and the speaker module (500) according to any one of claims 1 to 13, wherein the speaker module (500) is mounted on an inner side of the housing (100).

## Patentansprüche

1. Ein Lautsprechermodul (500), umfassend:
ein erstes Gehäuse (510);
ein zweites Gehäuse (520), wobei das zweite Gehäuse (520) im ersten Gehäuse (510) montiert ist und mit dem ersten Gehäuse (510) einen Schallraum (5001) bildet, eine Ausweichöffnung (5201) ist auf dem zweiten Gehäuse (520) vorgesehen, und die Ausweichöffnung (5201) steht mit dem Schallraum (5001) und einer Außenseite des zweiten Gehäuses (520) in Verbindung;
einen elektroakustischen Wandler (530), wobei der elektroakustische Wandler (530) im Schallraum (5001) montiert ist, der elektroakustische Wandler (530) umfasst ein unteres Polstück (21) und eine Schallmembran (31), das untere Polstück (21) verläuft durch die Ausweichöffnung (5201) und ist von einer Wand der Ausweichöffnung (5201) beabstandet, und die Schallmembran (31) ist von dem unteren Polstück (21) beabstandet und teilt den Schallraum (5001) in einen vorderen Schallraum (5002) und einen hinteren Schallraum (5003);
schallschluckende Partikel, wobei die schallschluckenden Partikel im hinteren Schallraum (5003) eingebracht sind;
einen Fixierring (40), wobei der Fixierring (40) zwischen dem zweiten Gehäuse (520) und dem unteren Polstück (21) montiert ist und den Rand des unteren Polstücks (21) umgibt; und
ein atmungsaktives Isolierglied (50), wobei das atmungsaktive Isolierglied (50) fest mit einer Oberseite des Fixierrings (40) verbunden ist und sich zwischen der Wand der Ausweichöffnung (5201) und dem unteren Polstück (21) befindet, wobei das atmungsaktive Isolierglied (50) den elektroakustischen Wandler (530) umgibt und dazu dient, die schallschluckenden Partikel und den elektroakustischen Wandler (530) voneinander zu isolieren, und
wobei der elektroakustische Wandler (530) ferner einen Korbrahmen (10) umfasst, wobei der Korbrahmen (10) einen Korb (11) umfasst, der Korb (11) befindet sich zwischen dem unteren Polstück (21) und der Schallmembran (31), das atmungsaktive Isolierglied (50) befindet sich an einer Unterseite des Korbs (11) und ist vom Korb (11) beabstandet, **dadurch gekennzeichnet, dass** die Größe des Spalts zwischen dem atmungsaktiven Isolierglied (50) und dem Korb (11) kleiner ist als die Partikelgröße jedes der schallschluckenden Partikel.

2. Lautsprechermodul (500) nach Anspruch 1, wobei eine erste Montage-Nut (5202) am zweiten Gehäuse (520) vorgesehen ist, eine Öffnung der ersten Montage-Nut (5202) an der Unterseite des zweiten Gehäuses (520) liegt, die erste Montage-Nut (5202) um das Ausweichloch (5201) herum angeordnet ist und die Wand des Ausweichlochs (5201) durchbricht, eine zweite Montage-Nut (211) am unteren Polstück (21) vorgesehen ist, eine Öffnung der zweiten Montage-Nut (211) an der Unterseite des unteren Polstücks (21) liegt, die zweite Montage-Nut (211) am Rand des unteren Polstücks (21) entlang angeordnet ist und eine seitliche Fläche des unteren Polstücks (21) durchbricht, und der Fixierring (40) zwischen der ersten Montage-Nut (5202) und der zweiten Montage-Nut (211) angebracht ist.

3. Lautsprechermodul (500) nach Anspruch 2, wobei eine Unterseite des Fixierrings (40) bündig mit der Unterseite des zweiten Gehäuses (520) ist, oder wobei eine Unterseite des Fixierrings (40) sich oberhalb der Unterseite des zweiten Gehäuses (520) befindet.

4. Lautsprechermodul (500) nach Anspruch 2 oder 3, wobei die Unterseite des Fixierrings (40) bündig mit der Unterseite des unteren Polstücks (21) ist, oder die Unterseite des Fixierrings (40) sich oberhalb der Unterseite des unteren Polstücks (21) befindet.

5. Lautsprechermodul (500) nach einem der Ansprüche 2 bis 4, wobei sowohl die Bodenwandfläche der ersten Montage-Nut (5202) als auch die Bodenwandfläche der zweiten Montage-Nut (211) Flächen sind, das Lautsprechermodul (500) ferner eine Klebeschicht umfasst, ein Teil der Klebeschicht zwischen der Oberseite des Fixierrings (40) und der Bodenwandfläche der ersten Montage-Nut (5202) klebend verbunden ist und ein weiterer Teil der Klebeschicht zwischen der Oberseite des Fixierrings (40) und der Bodenwandfläche der zweiten Montage-Nut (211) klebend verbunden ist.

6. Lautsprechermodul (500) nach einem der Ansprüche 2 bis 5, wobei das zweite Gehäuse (520) einen Gehäusekörper (521) und ein Verstärkungselement (522) umfasst, am Gehäusekörper (521) ein Montage-Durchgangsloch (5211) vorgesehen ist, das Montage-Durchgangsloch (5211) in der Dickenrichtung des Gehäusekörpers (521) hindurch verläuft, das Verstärkungselement (522) an der Oberseite des Gehäusekörpers (521) fest verbunden ist und das Montage-Durchgangsloch (5211) umgibt, und ein Teil des Verstärkungselements (522) gegenüber einer Lochwand des Montage-Durchgangslochs (5211) hervorsteht und gemeinsam mit der Lochwand des Montage-Durchgangslochs (5211) die erste Montage-Nut (5202) bildet.

7. Lautsprechermodul (500) nach Anspruch 6, wobei das Gehäuse (521) aus Kunststoff besteht, das Verstärkungselement (522) aus Metall besteht und das Gehäuse (521) und das Verstärkungselement (522) integral ausgebildet sind.

8. Lautsprechermodul (500) nach Anspruch 1, wobei auf dem zweiten Gehäuse (520) mehrere erste Positionierungsstifte (524) angeordnet sind, die mehrere ersten Positionierungsstifte (524) auf einer Oberseite des zweiten Gehäuses (520) angeordnet und jeweils um das Ausweichloch (5201) verteilt sind. Die mehreren ersten Positionierungsstifte (524) befinden sich außerhalb des atmungsaktiven Isolierelements (50) und sind von diesem beabstandet.

9. Lautsprechermodul (500) nach Anspruch 8, wobei an dem elektroakustischen Wandler (530) mehrere zweite Positionierungsstifte (13) angebracht sind, die mehreren zweiten Positionierungsstifte (13) sich am Rand des elektroakustischen Wandlers (530) befinden und voneinander beabstandet sind, wobei sich die mehreren zweiten Positionierungsstifte (13) auf der Innenseite des atmungsaktiven Isolierelements (50) befinden und ebenfalls von diesem beabstandet sind.

10. Lautsprechermodul (500) nach Anspruch 9, wobei der Abstand zwischen jeweils einem zweiten Positionierungsstift (13) und einem ersten Positionierungsstift (524) kleiner ist als die Partikelgröße der jeweiligen schallabsorbierenden Partikel.

11. Lautsprechermodul (500) nach Anspruch 9 oder 10, wobei die mehreren zweiten Positionierungsstifte (13) fest mit einer Unterseite des Korbes (11) verbunden sind.

12. Lautsprechermodul (500) nach einem der Ansprüche 1 bis 11, wobei der elektroakustische Wandler (530) weiterhin zwei erste Seitenmagnete (23) umfasst und beide ersten Seitenmagnete (23) auf einer Oberseite des unteren Polstücks (21) angebracht, voneinander beabstandet und einander gegenüberliegend angeordnet sind; und
zwei Ausweichkerbungen (501) am atmungsaktiven Isolierelement (50) vorgesehen sind, wobei beide Ausweichkerbungen (501) das atmungsaktive Isolierelement (50) in Dickenrichtung durchlaufen, eine Oberseite des atmungsaktiven Isolierelements (50) durchdringen und die beiden Ausweichkerbungen (501) voneinander beabstandet sowie einander gegenüberliegend ausgeführt sind. Die Ausweichkerbungen (501) sind jeweils separat vorgesehen, um die zwei ersten Seitenmagnete (23) zu vermeiden.

13. Lautsprechermodul (500) nach einem der Ansprüche 1 bis 12, wobei eine Mehrzahl von atmungsaktiven Öffnungen auf dem atmungsaktiven Isolierglied (50) vorgesehen sind, wobei jede der atmungsaktiven Öffnungen das atmungsaktive Isolierglied (50) in dessen Dickenrichtung durchdringt und die Porengröße jeder der atmungsaktiven Öffnungen kleiner ist als die Partikelgröße jeder der schallabsorbierenden Partikel.

14. Elektronisches Gerät (1000), umfassend ein Gehäuse (100) und das Lautsprechermodul (500) nach einem der Ansprüche 1 bis 13, wobei das Lautsprechermodul (500) an einer Innenseite des Gehäuses (100) angebracht ist.

## Revendications

1. Un module haut-parleur (500), comprenant :
un premier boîtier (510) ;
un second boîtier (520), ledit second boîtier (520) étant monté dans le premier boîtier (510) et enfermé avec le premier boîtier (510) pour former une cavité acoustique (5001), un orifice d'évitement (5201) étant ménagé sur le second boîtier (520), et l'orifice d'évitement (5201) communiquant avec la cavité acoustique (5001) et un côté extérieur du second boîtier (520) ;
un transducteur électroacoustique (530), ledit transducteur électroacoustique (530) étant monté dans la cavité acoustique (5001), le transducteur électroacoustique (530) comprenant une pièce polaire inférieure (21) et une membrane acoustique (31), la pièce polaire inférieure (21) traversant l'orifice d'évitement (5201) et étant espacée de la paroi du trou de l'orifice d'évitement (5201), et la membrane acoustique (31) étant espacée de la pièce polaire inférieure (21), et divisant la cavité acoustique (5001) en une cavité acoustique avant (5002) et une cavité acoustique arrière (5003) ;
des particules absorbant le son, lesdites particules absorbant le son étant placées dans la cavité acoustique arrière (5003) ;
une bague de fixation (40), ladite bague de fixation (40) étant montée entre le second boîtier (520) et la pièce polaire inférieure (21), et disposée autour du bord de la pièce polaire inférieure (21) ; et
un élément isolant respirant (50), ledit élément isolant respirant (50) étant fixé à la surface supérieure de la bague de fixation (40), et étant situé entre la paroi du trou de l'orifice d'évitement (5201) et la pièce polaire inférieure (21), et l'élément isolant respirant (50) étant agencé autour du transducteur électroacoustique (530), et destiné à isoler les particules absorbant le son et le transducteur électroacoustique (530), et
le transducteur électroacoustique (530) comprenant en outre un châssis (10), le châssis (10) comprenant un panier (11), le panier (11) étant situé entre la pièce polaire inférieure (21) et la membrane acoustique (31), l'élément isolant respirant (50) étant situé sur un côté inférieur du panier (11) et étant espacé du panier (11), **caractérisé en ce que** la taille de l'espace entre l'élément isolant respirant (50) et le panier (11) est inférieure à la taille des particules absorbant le son.

2. Le module haut-parleur (500) selon la revendication 1, dans lequel une première rainure de montage (5202) est prévue dans le second boîtier (520), une ouverture de la première rainure de montage (5202) étant située sur une surface inférieure du second boîtier (520), la première rainure de montage (5202) est disposée autour de l'orifice d'évitement (5201) et traverse la paroi de trou de l'orifice d'évitement (5201), une seconde rainure de montage (211) est prévue sur la pièce polaire inférieure (21), une ouverture de la seconde rainure de montage (211) est située sur une surface inférieure de la pièce polaire inférieure (21), la seconde rainure de montage (211) est disposée autour du bord de la pièce polaire inférieure (21) et traverse une surface latérale périphérique de la pièce polaire inférieure (21), et l'anneau de fixation (40) est monté entre la première rainure de montage (5202) et la seconde rainure de montage (211).

3. Le module haut-parleur (500) selon la revendication 2, dans lequel une surface inférieure de l'anneau de fixation (40) est affleurante avec la surface inférieure du second boîtier (520), ou une surface inférieure de l'anneau de fixation (40) est située du côté supérieur de la surface inférieure du second boîtier (520).

4. Le module haut-parleur (500) selon la revendication 2 ou 3, dans lequel la surface inférieure de l'anneau de fixation (40) est affleurante avec la surface inférieure de la pièce polaire inférieure (21), ou la surface inférieure de l'anneau de fixation (40) est située du côté supérieur de la surface inférieure de la pièce polaire inférieure (21).

5. Le module haut-parleur (500) selon l'une quelconque des revendications 2 à 4, dans lequel les surfaces de fond de rainure de la première rainure de montage (5202) et de la seconde rainure de montage (211) sont toutes deux des surfaces planes, le module haut-parleur (500) comprenant en outre une couche adhésive, une partie de la couche adhésive étant fixée de manière adhésive entre la surface supérieure de l'anneau de fixation (40) et la surface de fond de rainure de la première rainure de montage (5202), et une partie de la couche adhésive étant fixée de manière adhésive entre la surface supérieure de l'anneau de fixation (40) et la surface de fond de rainure de la seconde rainure de montage (211).

6. Le module haut-parleur (500) selon l'une quelconque des revendications 2 à 5, dans lequel le second boîtier (520) comprend un corps de boîtier (521) et un élément de renforcement (522), un trou traversant de montage (5211) est prévu sur le corps de boîtier (521), le trou traversant de montage (5211) traverse le corps de boîtier (521) dans la direction d'épaisseur du corps de boîtier (521), l'élément de renforcement (522) est fixé à une surface supérieure du corps de boîtier (521) et est disposé autour du trou traversant de montage (5211), et une partie de l'élément de renforcement (522) fait saillie par rapport à la paroi du trou traversant de montage (5211) et s'enclave avec la paroi du trou traversant de montage (5211) pour former la première rainure de montage (5202).

7. Le module haut-parleur (500) selon la revendication 6, dans lequel le corps du boîtier (521) est en plastique, l'élément de renforcement (522) est en métal, et le corps du boîtier (521) et l'élément de renforcement (522) sont formés d'une seule pièce.

8. Le module haut-parleur (500) selon la revendication 1, dans lequel une pluralité de premiers plots de positionnement (524) sont disposés sur le second boîtier (520), la pluralité de premiers plots de positionnement (524) étant agencée sur une surface supérieure du second boîtier (520) et espacée autour de l'orifice d'évitement (5201), et la pluralité de premiers plots de positionnement (524) se trouve du côté extérieur de l'élément isolant respirant (50) et est espacée de l'élément isolant respirant (50).

9. Le module haut-parleur (500) selon la revendication 8, dans lequel une pluralité de deuxièmes plots de positionnement (13) sont disposés sur le transducteur électroacoustique (530), la pluralité de deuxièmes plots de positionnement (13) étant située au bord du transducteur électroacoustique (530) et espacée les uns des autres, et la pluralité de deuxièmes plots de positionnement (13) est située à l'intérieur de l'élément isolant respirant (50) et espacée de l'élément isolant respirant (50).

10. Le module haut-parleur (500) selon la revendication 9, dans lequel la taille de l'écart entre chaque deuxième plot de positionnement (13) et chaque premier plot de positionnement (524) est inférieure à la taille des particules absorbant le son.

11. Le module haut-parleur (500) selon la revendication 9 ou 10, dans lequel la pluralité de deuxièmes plots de positionnement (13) est fixée de manière fixe à la surface inférieure de la corbeille (11).

12. Le module haut-parleur (500) selon l'une quelconque des revendications 1 à 11, dans lequel le transducteur électroacoustique (530) comprend en outre deux premiers aimants latéraux (23), les deux premiers aimants latéraux (23) étant tous deux montés sur une surface supérieure de la pièce polaire inférieure (21), espacés et agencés face à face ; et
deux encoches d'évitement (501) sont formées sur l'élément isolant respirant (50), les deux encoches d'évitement (501) traversant l'élément isolant respirant (50) dans sa direction d'épaisseur et traversant également une surface supérieure de l'élément isolant respirant (50), et les deux encoches d'évitement (501) sont espacées et disposées face à face, chacune étant configurée séparément pour éviter les deux premiers aimants latéraux (23).

13. Module haut-parleur (500) selon l'une quelconque des revendications 1 à 12, dans lequel une pluralité de trous respirants sont prévus sur l'élément isolant respirant (50), chacun des trous respirants traversant l'élément isolant respirant (50) dans la direction de l'épaisseur de l'élément isolant respirant (50), et la taille des pores de chacun des trous respirants étant inférieure à la taille des particules de chacune des particules absorbant le son.

14. Dispositif électronique (1000), comprenant un boîtier (100) et le module haut-parleur (500) selon l'une quelconque des revendications 1 à 13, dans lequel le module haut-parleur (500) est monté sur un côté intérieur du boîtier (100).
